# EUROPEAN PATENT APPLICATION

(11) **EP 4 811 900 A1**
(43) Date of publication of application: **23.09.2026**
(21) Application number: 24906184.7
(22) Date of filing: 10.12.2024
(51) Int. Cl.: H04W 72/0446

(54) **COMMUNICATION METHOD AND RELATED APPARATUS**

(30) Priority: 20.12.2023 CN 202311762628
(71) Applicant: Huawei Technologies Co., Ltd., Shenzhen, Guangdong 518129 (CN)
(72) Inventor: ZHU, Yue, Shenzhen, Guangdong 518129 (CN); GAO, Junhui, Shenzhen, Guangdong 518129 (CN); YUAN, Yiling, Shenzhen, Guangdong 518129 (CN); WANG, Xiaohan, Shenzhen, Guangdong 518129 (CN); XU, Jun, Shenzhen, Guangdong 518129 (CN)
(74) Representative: Pfenning, Meinig & Partner mbB
(86) International application number: PCT/CN2024/138092
(87) International publication number: WO 2025/130701

(57) **Abstract**

Embodiments of this application provide a communication method and a related apparatus. The method includes: obtaining first indication information, where the first indication information indicates a reference energy proportion of space-frequency joint bases projected onto a downlink channel; determining, based on the energy proportion and the current downlink channel, a first space-frequency joint basis matrix to be reported; and sending first feedback information, where the first feedback information includes the first space-frequency joint basis matrix or a first basis difference matrix, and the first basis difference matrix includes a difference between the first space-frequency joint basis matrix and a reported second space-frequency joint basis matrix. According to embodiments of this application, the performance of DMRS-assisted SRS channel updating is improved.

## Description

This application claims priority to Chinese Patent Application No. 202311762628.0, filed with the China National Intellectual Property Administration on December 20, 2023 and entitled "COMMUNICATION METHOD AND RELATED APPARATUS", which is incorporated herein by reference in its entirety.

### TECHNICAL FIELD

The present invention relates to the field of communication technologies, and in particular, to a communication method and a related apparatus.

### BACKGROUND

A sounding reference signal (Sounding Reference Signal, SRS), also referred to as an uplink sounding signal or a sounding signal, is mainly used to estimate uplink channel quality, and is therefore used for uplink scheduling, uplink timing advance (timing advance, TA), uplink beam management, and the like. In a time division duplex (Time division duplex, TDD) system with uplink-downlink channel reciprocity, channel symmetry can be used to estimate downlink channel quality. In current communication systems, an SRS is periodically sent to obtain full uplink channel information. As the operating frequency band shifts to U6G (namely, 6425-7125 MHz in the upper portion of 6 GHz), channel time variation accelerates and propagation loss increases, causing severe channel aging for uplink SRS measurements. One potential solution to mitigate SRS channel aging is uplink DMRS-assisted SRS measurement, which uses space-frequency joint statistical information along with the instantaneous channel of the DMRS to perform channel extrapolation, thereby restoring (partially or fully) the dual-end full channel information. In this solution, the terminal reports space-frequency joint statistical bases U and statistical eigenvectors Σ to the base station for subsequent channel extrapolation.

The base station configures or indicates, via higher-layer parameters, a quantity of space-frequency joint statistical bases U and a quantity of statistical eigenvectors Σ that the terminal needs to report, and reserves a maximum resource for the terminal in advance. The terminal periodically reports the space-frequency joint statistical bases and the statistical eigenvectors Σ on the resource. However, when an SRS update period is long, the performance of channel extrapolation deteriorates, which in turn degrades the performance of DMRS-assisted SRS channel updating.

### SUMMARY

Embodiments of this application disclose a communication method and a related apparatus, to improve the performance of DMRS-assisted SRS channel updating.

According to a first aspect, an embodiment of this application provides a communication method. The method includes:
obtaining first indication information, where the first indication information indicates a reference energy proportion of space-frequency joint bases projected onto a downlink channel;
determining, based on the energy proportion and a current downlink channel, a first space-frequency joint basis matrix to be reported; and
sending first feedback information, where the first feedback information includes the first space-frequency joint basis matrix or a first basis difference matrix, and the first basis difference matrix includes a difference between the first space-frequency joint basis matrix and a reported second space-frequency joint basis matrix.

In the foregoing method, a network device sends the reference energy proportion to a terminal device, and instead of using a fixed quantity of space-frequency joint bases, the terminal device determines, based on a current latest downlink channel status and the reference energy proportion, space-frequency joint bases required by the network device. Therefore, a quantity of obtained space-frequency joint bases is more accurate. Therefore, when the network device subsequently performs DMRS-assisted SRS channel updating based on the more accurate quantity of obtained space-frequency joint bases, the performance of channel extrapolation does not deteriorate, thereby improving the performance of DMRS-assisted SRS channel updating. Optionally, during reporting of a space-frequency joint basis matrix, instead of a complete space-frequency joint basis matrix, a difference from history, namely, the first difference basis matrix, may be alternatively reported. This reduces time-frequency resources occupied during reporting, thereby also improving reporting efficiency.

With reference to the first aspect, in a possible implementation, the first feedback information further includes a first vector difference matrix, the first vector difference matrix is a matrix formed by a difference between a first vector matrix and a second vector matrix, the first vector matrix is a vector matrix obtained by combining, on diagonal elements, eigenvalues respectively corresponding to space-frequency joint bases in the first space-frequency joint basis matrix, and the second vector matrix is a vector matrix obtained by combining, on diagonal elements, eigenvalues respectively corresponding to space-frequency joint bases in the second space-frequency joint basis matrix.

In this implementation, in addition to the difference of the space-frequency joint basis matrix, a difference component of an eigenvector matrix, namely, the first vector difference matrix, may be further reported, so that time-frequency resources occupied during reporting are further reduced, thereby also improving reporting efficiency.

With reference to any one of the first aspect or the foregoing possible implementations of the first aspect, in another possible implementation, determining, based on the energy proportion and the current downlink channel, the first space-frequency joint basis matrix to be reported includes:
selecting the first space-frequency joint basis matrix from an initial space-frequency joint basis matrix based on the energy proportion, where the reported second space-frequency joint basis matrix is also selected from the initial space-frequency joint basis matrix, and the initial space-frequency joint basis matrix is obtained through eigendecomposition on a space-frequency statistical covariance matrix of the downlink channel.

In this implementation, eigendecomposition does not need to be performed on the downlink channel again to determine the first space-frequency joint basis matrix. Instead, the previously generated initial space-frequency joint basis matrix is used to directly select the first space-frequency joint basis matrix from the initial space-frequency joint basis matrix. Because the downlink channel is not re-decomposed, computational overheads are reduced, and efficiency of determining the first space-frequency joint basis matrix is also improved.

With reference to any one of the first aspect or the foregoing possible implementations of the first aspect, in another possible implementation, the method further includes:
receiving second indication information, where the second indication information indicates to report the first feedback information.

It may be understood that the first feedback information is reported only when the second indication information sent by the network device is received. This avoids ineffective reporting, thereby reducing communication overheads and computational overheads of the network device and the terminal device.

With reference to any one of the first aspect or the foregoing possible implementations of the first aspect, in another possible implementation, the method further includes:
receiving third indication information, where the third indication information indicates a first time-frequency resource, and the first time-frequency resource is used to carry the first basis difference matrix.

With reference to any one of the first aspect or the foregoing possible implementations of the first aspect, in another possible implementation, the method further includes:
sending second feedback information, where the second feedback information indicates a quantity of space-frequency joint bases in the first basis difference matrix.

In the method, the quantity of the space-frequency joint bases in the first basis difference matrix is indicated to the network device. In this way, the network device can allocate a specific time-frequency resource in a targeted manner based on the quantity of the space-frequency joint bases, thereby avoiding shortage or waste of time-frequency resources.

With reference to any one of the first aspect or the foregoing possible implementations of the first aspect, in another possible implementation, obtaining the first indication information includes:
receiving the first indication information.

In this implementation, the terminal device may directly receive the first indication information from the network device.

According to a second aspect, an embodiment of this application provides a communication method, including:
sending first indication information, where the first indication information indicates a reference energy proportion of space-frequency joint bases projected onto a downlink channel; and
receiving first feedback information, where the first feedback information includes a first space-frequency joint basis matrix or a first basis difference matrix, the first basis difference matrix includes a difference between the first space-frequency joint basis matrix and a reported second space-frequency joint basis matrix, and the reference energy proportion is used to determine the first space-frequency joint basis matrix.

In the foregoing method, a network device sends the reference energy proportion to a terminal device, and instead of using a fixed quantity of space-frequency joint bases, the terminal device determines, based on a current latest downlink channel status and the reference energy proportion, space-frequency joint bases required by the network device. Therefore, a quantity of obtained space-frequency joint bases is more accurate. Therefore, when the network device subsequently performs DMRS-assisted SRS channel updating based on the more accurate quantity of obtained space-frequency joint bases, the performance of channel extrapolation does not deteriorate, thereby improving the performance of DMRS-assisted SRS channel updating. Optionally, during reporting of a space-frequency joint basis matrix, instead of a complete space-frequency joint basis matrix, a difference from history, namely, the first difference basis matrix, may be alternatively reported. This reduces time-frequency resources occupied during reporting, thereby also improving reporting efficiency.

With reference to the second aspect, in another possible implementation, the first feedback information further includes a first vector difference matrix, the first vector difference matrix is a matrix formed by a difference between a first vector matrix and a second vector matrix, the first vector matrix is a vector matrix obtained by combining, on diagonal elements, eigenvalues respectively corresponding to space-frequency joint bases in the first space-frequency joint basis matrix, and the second vector matrix is a vector matrix obtained by combining, on diagonal elements, eigenvalues respectively corresponding to space-frequency joint bases in the second space-frequency joint basis matrix.

In this implementation, in addition to the difference of the space-frequency joint basis matrix, a difference component of an eigenvector matrix, namely, the first vector difference matrix, may be further reported, so that time-frequency resources occupied during reporting are further reduced, thereby also improving reporting efficiency.

With reference to any one of the second aspect or the foregoing possible implementations of the second aspect, in another possible implementation, the method further includes:
sending second indication information, where the second indication information indicates to report the first feedback information.

It may be understood that the terminal device can report the first feedback information only when the second indication information indicates reporting. This avoids ineffective reporting, thereby reducing communication overheads and computational overheads of the network device and the terminal device.

With reference to any one of the second aspect or the foregoing possible implementations of the second aspect, in another possible implementation, the method further includes:
determining that a condition for continuing to report the first feedback information is met.

It may be understood that a subsequent procedure of reporting the first feedback information is triggered only when it is determined that the first feedback information can be reported, thereby reducing communication overheads and computational overheads of the network device and the terminal device.

With reference to any one of the second aspect or the foregoing possible implementations of the second aspect, in another possible implementation, the method further includes:
sending third indication information, where the third indication information indicates a first time-frequency resource, and the first time-frequency resource is used to carry the first basis difference matrix.

With reference to any one of the second aspect or the foregoing possible implementations of the second aspect, in another possible implementation, the method further includes:
receiving second feedback information, where the second feedback information indicates a quantity of space-frequency joint bases in the first basis difference matrix.

In the method, the quantity of the space-frequency joint bases in the first basis difference matrix is indicated to the network device. In this way, the network device can allocate a specific time-frequency resource in a targeted manner based on the quantity of the space-frequency joint bases, thereby avoiding shortage or waste of time-frequency resources.

With reference to any one of the second aspect or the foregoing possible implementations of the second aspect, in another possible implementation, the method further includes:
performing a demodulation reference signal DMRS-assisted sounding reference signal SRS channel updating based on the first basis difference matrix.

It may be understood that the first space-frequency joint basis matrix may be determined based on the first basis difference matrix and the existing second space-frequency joint basis matrix. Because the first space-frequency joint basis matrix is a relatively accurate space-frequency joint basis matrix, the performance of DMRS-assisted SRS channel updating based on the first space-frequency joint basis matrix is good.

According to a third aspect, an embodiment of this application provides a communication method. The method includes:
sending third feedback information, where the third feedback information includes a third space-frequency joint basis matrix; and
sending fourth feedback information, where the fourth feedback information indicates a first energy proportion, and the first energy proportion includes an energy proportion of space-frequency joint bases projected onto a current downlink channel.

In the foregoing method, when reporting a space-frequency joint basis matrix to a network device, a terminal device also reports the first energy proportion determined based on the current space-frequency joint basis matrix and the current channel, so that the network device determines whether the current first energy proportion meets a requirement, to determine how to perform subsequent adjustment, so that the network device obtains an appropriate quantity of space-frequency joint bases, thereby improving the performance of DMRS-assisted SRS channel updating.

With reference to the third aspect, in a possible implementation, the fourth feedback information includes a value of the first energy proportion.

With reference to any one of the third aspect or the foregoing possible implementations of the third aspect, in another possible implementation, the fourth feedback information includes an index corresponding to the first energy proportion.

It may be understood that indication in an index manner requires only small field overheads, so that communication resources can be saved and communication efficiency can be improved.

With reference to any one of the third aspect or the foregoing possible implementations of the third aspect, in another possible implementation, the method further includes:
receiving fourth indication information, where the fourth indication information indicates to re-report a space-frequency joint basis matrix; and
sending fifth feedback information, where the fifth feedback information includes a fourth space-frequency joint basis matrix.

It may be understood that re-reporting of the space-frequency joint basis matrix can meet the latest requirement of the network device, thereby improving the performance of DMRS-assisted SRS channel updating.

With reference to any one of the third aspect or the foregoing possible implementations of the third aspect, in another possible implementation, the method further includes:
receiving fourth indication information, where the fourth indication information indicates to re-report a space-frequency joint basis matrix; and
sending sixth feedback information, where the sixth feedback information includes a difference matrix, and the difference matrix includes a difference between space-frequency joint bases in a fourth space-frequency joint basis matrix and space-frequency joint bases in the third space-frequency joint basis matrix.

It may be understood that the difference matrix is reported to facilitate determining of the latest space-frequency joint basis matrix by the network device, to meet the latest requirement of the network device, thereby improving the performance of DMRS-assisted SRS channel updating.

With reference to any one of the third aspect or the foregoing possible implementations of the third aspect, in another possible implementation, the method further includes:
receiving fifth indication information, where the fifth indication information indicates a second energy proportion, and the second energy proportion includes the energy proportion of the space-frequency joint bases projected onto the current downlink channel; and
determining the fourth space-frequency joint basis matrix based on the second energy proportion.

It may be understood that the fourth space-frequency joint basis matrix determined based on the second energy proportion newly indicated by the network device can better meet the latest requirement of the network device, thereby improving the performance of DMRS-assisted SRS channel updating.

With reference to any one of the third aspect or the foregoing possible implementations of the third aspect, in another possible implementation, the third feedback information further includes a third vector matrix, and the third vector matrix is a vector matrix obtained by combining, on diagonal elements, eigenvalues corresponding to the space-frequency joint bases in the third space-frequency joint basis matrix.

With reference to any one of the third aspect or the foregoing possible implementations of the third aspect, in another possible implementation, sending the fourth feedback information includes:
periodically sending the fourth feedback information.

It may be understood that the fourth feedback information is periodically sent, so that the network device can determine in a timely manner whether a current energy proportion meets a requirement, and determine whether a reported space-frequency joint basis matrix needs to be adjusted, thereby improving the performance of DMRS-assisted SRS channel updating.

According to a fourth aspect, an embodiment of this application provides a communication method. The method includes:
receiving third feedback information, where the third feedback information includes a third space-frequency joint basis matrix; and
receiving fourth feedback information, where the fourth feedback information indicates a first energy proportion, and the first energy proportion includes an energy proportion of space-frequency joint bases projected onto a current downlink channel.

In the foregoing method, when reporting a space-frequency joint basis matrix to a network device, a terminal device also reports the first energy proportion determined based on the current space-frequency joint basis matrix and the current channel, so that the network device determines whether the current first energy proportion meets a requirement, to determine how to perform subsequent adjustment, so that the network device obtains an appropriate quantity of space-frequency joint bases, thereby improving the performance of DMRS-assisted SRS channel updating.

With reference to the fourth aspect, in a possible implementation, the fourth feedback information includes a value of the first energy proportion.

With reference to any one of the fourth aspect or the foregoing possible implementations of the fourth aspect, in another possible implementation, the fourth feedback information includes an index corresponding to the first energy proportion.

It may be understood that indication in an index manner requires only small field overheads, so that communication resources can be saved and communication efficiency can be improved.

With reference to any one of the fourth aspect or the foregoing possible implementations of the fourth aspect, in another possible implementation, the method further includes:
sending fourth indication information, where the fourth indication information indicates to re-report a space-frequency joint basis matrix; and
receiving fifth feedback information, where the fifth feedback information includes a fourth space-frequency joint basis matrix.

It may be understood that re-reporting of the space-frequency joint basis matrix can meet the latest requirement of the network device, thereby improving the performance of DMRS-assisted SRS channel updating.

With reference to any one of the fourth aspect or the foregoing possible implementations of the fourth aspect, in another possible implementation, the method further includes:
sending fourth indication information, where the fourth indication information indicates to re-report a space-frequency joint basis matrix; and
receiving sixth feedback information, where the sixth feedback information includes a difference matrix, and the difference matrix includes a difference between space-frequency joint bases in a fourth space-frequency joint basis matrix and space-frequency joint bases in the third space-frequency joint basis matrix.

It may be understood that the difference matrix is reported to facilitate determining of the latest space-frequency joint basis matrix by the network device, to meet the latest requirement of the network device, thereby improving the performance of DMRS-assisted SRS channel updating.

With reference to any one of the fourth aspect or the foregoing possible implementations of the fourth aspect, in another possible implementation, the method further includes:
determining that the first energy proportion is less than a preset energy proportion threshold.

It may be understood that the network device triggers the operation of sending the fourth indication information only when determining that the first energy proportion is less than the preset energy proportion threshold, thereby avoiding waste of communication overheads and computational overheads caused by frequent sending or untimely sending.

With reference to any one of the fourth aspect or the foregoing possible implementations of the fourth aspect, in another possible implementation, the method further includes:
sending fifth indication information, where the fifth indication information indicates a second energy proportion, the second energy proportion includes the energy proportion of the space-frequency joint bases projected onto the current downlink channel, and the second energy proportion is used to calculate the fourth space-frequency joint basis matrix.

With reference to any one of the fourth aspect or the foregoing possible implementations of the fourth aspect, in another possible implementation, the third feedback information further includes a vector matrix, and the vector matrix is a vector matrix obtained by combining, on diagonal elements, eigenvalues corresponding to the space-frequency joint bases in the third space-frequency joint basis matrix.

It may be understood that the terminal device determines the fourth space-frequency joint basis matrix based on the second energy proportion newly indicated by the network device can better meet the latest requirement of the network device, thereby improving the performance of DMRS-assisted SRS channel updating.

With reference to any one of the fourth aspect or the foregoing possible implementations of the fourth aspect, in another possible implementation, the method further includes:
performing a demodulation reference signal DMRS-assisted sounding reference signal SRS channel updating based on the fourth space-frequency joint basis matrix.

It may be understood that re-reporting of the fourth space-frequency joint basis matrix can meet the latest requirement of the network device, thereby improving the performance of DMRS-assisted SRS channel updating.

According to a fifth aspect, an embodiment of this application provides a communication apparatus. The communication apparatus may be a terminal device or a component or a functional module in the terminal device.

The communication apparatus includes a module configured to perform the method according to any one of the first aspect or the possible implementations of the first aspect.

Alternatively, the communication apparatus includes a processor, and the processor is configured to perform the method according to any one of the first aspect or the possible implementations of the first aspect.

Alternatively, the communication apparatus includes a module configured to perform the method according to any one of the third aspect or the possible implementations of the third aspect.

Alternatively, the communication apparatus includes a processor, and the processor is configured to perform the method according to any one of the third aspect or the possible implementations of the third aspect.

According to a sixth aspect, an embodiment of this application provides a communication apparatus. The communication apparatus may be a network device or a component or a functional module in the network device.

The communication apparatus includes a module configured to perform the method according to any one of the second aspect or the possible implementations of the second aspect.

Alternatively, the communication apparatus includes a processor, and the processor is configured to perform the method according to any one of the second aspect or the possible implementations of the second aspect.

Alternatively, the communication apparatus includes a module configured to perform the method according to any one of the fourth aspect or the possible implementations of the fourth aspect.

Alternatively, the communication apparatus includes a processor, and the processor is configured to perform the method according to any one of the fourth aspect or the possible implementations of the fourth aspect.

According to a seventh aspect, an embodiment of this application provides a communication apparatus, including a logic circuit and an interface, where the logic circuit is coupled to the interface, and the interface is configured to input and/or output information, where
the logic circuit is configured to perform the method according to any one of the first aspect or the possible implementations of the first aspect;
the logic circuit is configured to perform the method according to any one of the second aspect or the possible implementations of the second aspect;
the logic circuit is configured to perform the method according to any one of the third aspect or the possible implementations of the third aspect; or
the logic circuit is configured to perform the method according to any one of the fourth aspect or the possible implementations of the fourth aspect.

According to an eighth aspect, an embodiment of this application provides a computer-readable storage medium, where the computer-readable storage medium is configured to store a computer program, where
when the computer program is executed, the method according to any one of the first aspect or the possible implementations of the first aspect can be implemented;
when the computer program is executed, the method according to any one of the second aspect or the possible implementations of the second aspect can be implemented;
when the computer program is executed, the method according to any one of the third aspect or the possible implementations of the third aspect can be implemented; or
when the computer program is executed, the method according to any one of the fourth aspect or the possible implementations of the fourth aspect can be implemented.

According to a ninth aspect, an embodiment of this application provides a communication system. The communication system includes a network device and a terminal device.

The terminal device is configured to perform the method according to any one of the first aspect or the possible implementations of the first aspect or any one of the third aspect or the possible implementations of the third aspect. The network device is configured to perform the method according to any one of the second aspect or the possible implementations of the second aspect or any one of the fourth aspect or the possible implementations of the fourth aspect.

### BRIEF DESCRIPTION OF DRAWINGS

The following describes accompanying drawings used in embodiments of this application.
FIG. 1 is a diagram of an architecture of a communication system according to an embodiment of this application;
FIG. 2 is a diagram of an architecture of a communication system according to an embodiment of this application;
FIG. 3 is a diagram of an architecture of a communication system according to an embodiment of this application;
FIG. 4 is a diagram of an internal structure of a communication device according to an embodiment of this application;
FIG. 5 is a schematic flowchart of a communication method according to an embodiment of this application;
FIG. 6 is a schematic flowchart of a communication method according to an embodiment of this application;
FIG. 7 is a schematic flowchart of a communication method according to an embodiment of this application;
FIG. 8 is a schematic flowchart of a communication method according to an embodiment of this application;
FIG. 9 is a diagram of a structure of a communication apparatus according to an embodiment of this application;
FIG. 10 is a diagram of a structure of a communication apparatus according to an embodiment of this application; and
FIG. 11 is a diagram of a structure of a communication apparatus according to an embodiment of this application.

### DESCRIPTION OF EMBODIMENTS

The following describes embodiments of this application with reference to the accompanying drawings in embodiments of this application.

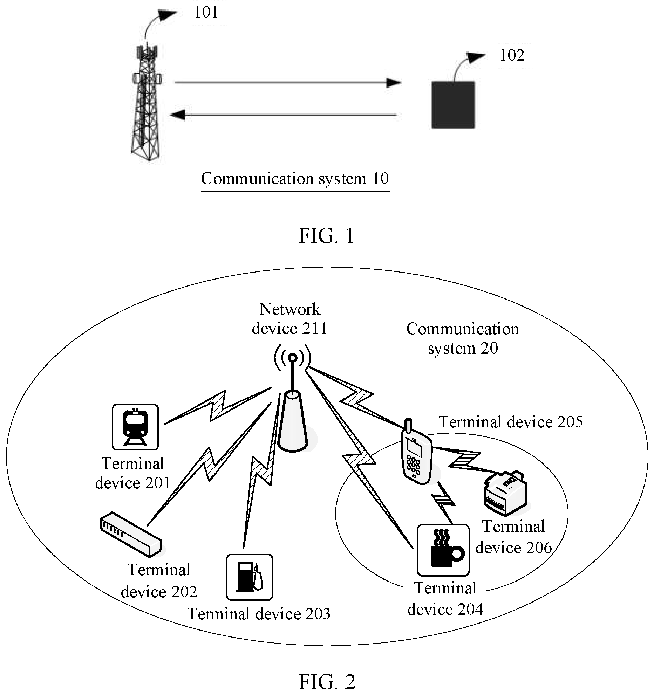

FIG. 1 is a diagram of an architecture of a communication system according to an embodiment of this application. The communication system 10 includes a transmitting end 101 and a receiving end 102. The receiving end 102 and the transmitting end 101 may perform transmission via a transmission medium such as a radio wave. For example, the following communication technology is used for communication: a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th Generation, 5G) mobile communication system, a new radio access technology (new radio access technology, NR), a 6th generation (6th Generation, 6G) mobile communication system, or another radio access technology. The foregoing communication technology may use a non-standalone (non-standalone, NSA) networking mode and/or a standalone (standalone, SA) networking mode. In addition, the communication system may further be used in machine-type communication (machine-type communication, MTC), a long term evolution-machine (long term evolution-machine, LTE-M) technology, a device-to-device (device-to-device, D2D) network, a machine-to-machine (machine-to-machine, M2M) network, an internet of things (internet of things, IoT) network, or another network. The IoT network may include, for example, an internet of vehicles. Communication manners in an internet of vehicles system are collectively referred to as a vehicle to X device (vehicle to X, V2X, X can stand for anything). For example, the V2X may include: vehicle to vehicle (vehicle to vehicle, V2V) communication, vehicle to infrastructure (vehicle to infrastructure, V2I) communication, vehicle to pedestrian communication (vehicle to pedestrian, V2P), vehicle to network (vehicle to network, V2N) communication, or the like. The V2X communication system is a sidelink (sidelink, SL) transmission technology based on D2D communication.

FIG. 2 is a diagram of a structure of a communication system 20 to which an embodiment of this application is applicable. The communication system is shown by using an example in which the transmitting end 101 is a network device 211 and the receiving end 102 is a terminal device 202. Specifically, the communication system 20 includes the network device 211, a terminal device 201, the terminal device 202, a terminal device 203, a terminal device 204, a terminal device 205, and a terminal device 206. It should be understood that the communication system 20 may include more network devices or more or fewer terminal devices. The network device and the terminal device may be hardware, software obtained through functional division, or a combination thereof. The network device and the terminal device may communicate with each other through another device or network element. In the system, the network device 211 may perform data transmission with the plurality of terminal devices. To be specific, the network device 211 sends downlink data to the terminal device 201 to the terminal device 206. Certainly, the terminal device 201 to the terminal device 206 may send uplink data to the network device 211. In addition, the terminal device 204, the terminal device 205, and the terminal device 206 may alternatively constitute a communication system. In the system, the network device 211 may send downlink data to the terminal device 201, the terminal device 202, and the terminal device 205. Then, the terminal device 205 sends the downlink data to the terminal device 204 or the terminal device 206. Methods in embodiments of this application may be applied to the communication system 20 shown in FIG. 2.
(1) Terminal device: A terminal device includes a device that provides a voice and/or data connectivity for a user. Specifically, the terminal device includes a device that provides a voice for the user, includes a device that provides data connectivity for the user, or includes a device that provides a voice and data connectivity for the user. For example, the terminal device may include a handheld device with a wireless connection function, or a processing device connected to a wireless modem. The terminal device may communicate with a core network through a radio access network (radio access network, RAN), and exchange voice or data with the RAN, or exchange voice and data with the RAN. The terminal device may include user equipment (user equipment, UE), a wireless terminal device, a mobile terminal device, a device-to-device (device-to-device, D2D) terminal device, a vehicle-to-everything (vehicle-to-everything, V2X) terminal device, a machine-to-machine/machine-type communication (machine-to-machine/machine-type communication, M2M/MTC) terminal device, an internet of things (internet of things, IoT) terminal device, a light terminal device (light UE), reduced capability user equipment (reduced capability UE, REDCAP UE), a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the terminal device may include a mobile phone (or referred to as a "cellular" phone), a smartphone (smartphone), a computer having a mobile terminal device, a portable, pocket-sized, handheld, computer built-in mobile apparatus, a laptop computer (laptop computer), a wireless data card, a tablet computer, a wireless modem (modem), and the like. For example, the terminal device may be a device, such as a personal communication service (personal communication service, PCS) phone, a cordless telephone, a session initiation protocol (session initiation protocol, SIP) phone, a wireless local loop (wireless local loop, WLL) station, or a personal digital assistant (personal digital assistant, PDA). The terminal device may further include a limited device, for example, a device with relatively low power consumption, a device with a limited storage capability, or a device with a limited computing capability. For example, the terminal device includes an information sensing device such as a barcode, radio frequency identification (radio frequency identification, RFID), a sensor, a global positioning system (global positioning system, GPS), or a laser scanner.

As an example instead of a limitation, in embodiments of this application, the terminal device may be alternatively a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or a part of functions without depending on smartphones, for example, smart watches or smart glasses, and include devices that are dedicated to only one type of application function and need to collaboratively work with other devices such as smartphones, for example, various smart bands, smart helmets, or smart jewelry for monitoring physical signs.

If the various terminal devices described above are located in a vehicle (for example, placed in the vehicle or installed in the vehicle), the terminal devices may be all considered as vehicle-mounted terminal devices. For example, the vehicle-mounted terminal devices are also referred to as on-board units (on-board unit, OBU). In embodiments of this application, the terminal device may further include a relay (relay). Alternatively, it is understood that any device that can perform data communication with the base station may be considered as the terminal device.

In this embodiment of this application, the apparatus configured to implement a function of the terminal device may be a terminal device, or may be an apparatus that can support the terminal device in implementing the function, for example, a chip system. The apparatus may be installed in the terminal device. In this embodiment of this application, the chip system may include a chip, or may include a chip and another discrete component. In the technical solutions provided in embodiments of this application, an example in which the apparatus configured to implement the function of the terminal is a terminal device is used for describing the technical solutions provided in embodiments of this application.

(2) Network device: A network device includes, for example, an access network (access network, AN) device such as a base station (for example, an access point), and may be a device that communicates with a wireless terminal device through an air interface in one or more cells in an access network. Alternatively, the network device is, for example, a road side unit (road side unit, RSU) in a vehicle-to-everything (vehicle-to-everything, V2X) technology. The base station may be configured to perform mutual conversion between a received over-the-air frame and an IP packet, to serve as a router between the terminal device and a remaining part of the access network. The remaining part of the access network may include an IP network. The RSU may be a fixed infrastructure entity supporting a V2X application, and may exchange a message with another entity supporting the V2X application. The network device may further coordinate attribute management of the air interface. For example, the network device may include a base transceiver station (Base Transceiver Station, BTS) in a global system for mobile communications (Global System for Mobile Communications, GSM) or code division multiple access (Code Division Multiple Access, CDMA) network, an NB (NodeB) in wideband code division multiple access (Wideband Code Division Multiple Access, WCDMA), an evolved NodeB (NodeB, eNB, or e-NodeB, evolved NodeB) in a long term evolution LTE system or a long term evolution-advanced (long term evolution-advanced, LTE-A) system, or may include a next generation NodeB (next generation NodeB, gNB) in a 5G NR system (also referred to as an NR system for short), or may include a radio controller, a central unit (central unit, CU), and a distributed unit (distributed unit, DU) in a cloud radio access network (cloud radio access network, Cloud RAN) system. In addition, the network device may be a wearable device, a vehicle-mounted device, a transmission reception point (Transmission Reception Point, TRP), or the like. This is not limited in embodiments of this application.

The network device may further include a core network device, for example, an access and mobility management function (access and mobility management function, AMF), a user plane function (user plane function, UPF), or a session management function (session management function, SMF).

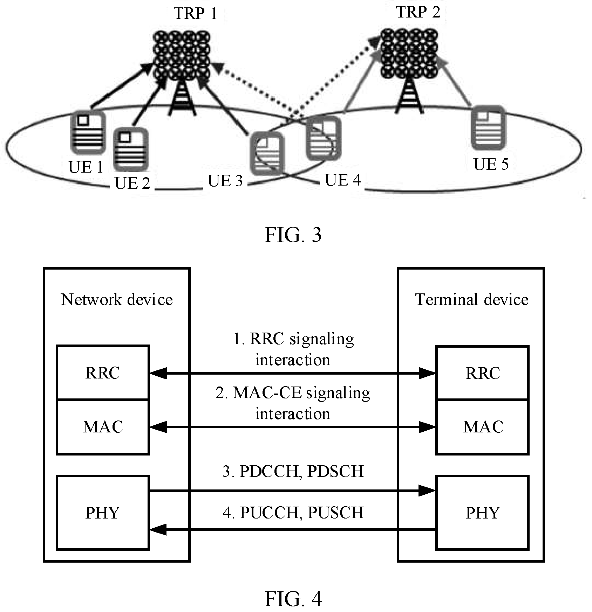

As shown in FIG. 3, an example in which the network device 211 is a TRP and the terminal device 202 is UE is used to show a communication system including a TRP 1, a TRP 2 (an actual quantity may be greater or less), and UE 1 to UE 5 (an actual quantity may be greater or less). The UE 1 to the UE 5 may send uplink data, and the uplink data sent by the UE 1 to the UE 5 (for example, the data sent by the UE 1, the UE 2, and the UE 5 in FIG. 3) may be received by one of the TRPs, or two TRPs may jointly receive the uplink data (for example, the data sent by the UE 3 and the UE 4 in FIG. 3). In addition, the TRP may send downlink information to the UE 1 to the UE 5, for example, a quantity of uplink transmission flows and uplink precoding of each UE are calculated and indicated using the downlink information.

In embodiments of this application, an apparatus configured to implement a function of the network device may be a network device, or may be an apparatus, for example, a chip system, that can support the network device in implementing the function. The apparatus may be installed in the network device.

FIG. 4 is a diagram of an internal structure of a communication device (for example, a network device or a terminal device), which is merely a rough example herein, and in practice further includes more other modules or components. In the structure shown in FIG. 4, each of the network device 211 and the terminal device 202 includes an RRC signaling interaction module, a MAC signaling interaction module, and a PHY signaling and data interaction module. The RRC signaling interaction module is a module configured to send and receive RRC signaling. The MAC signaling interaction module is configured to send and receive MAC-CE signaling. The PHY signaling and data interaction module is configured to: send, by a network device, downlink control signaling or downlink data, and receive uplink signaling or uplink data; and send, by a terminal device, uplink control signaling or uplink data, and receive downlink control signaling or downlink data.

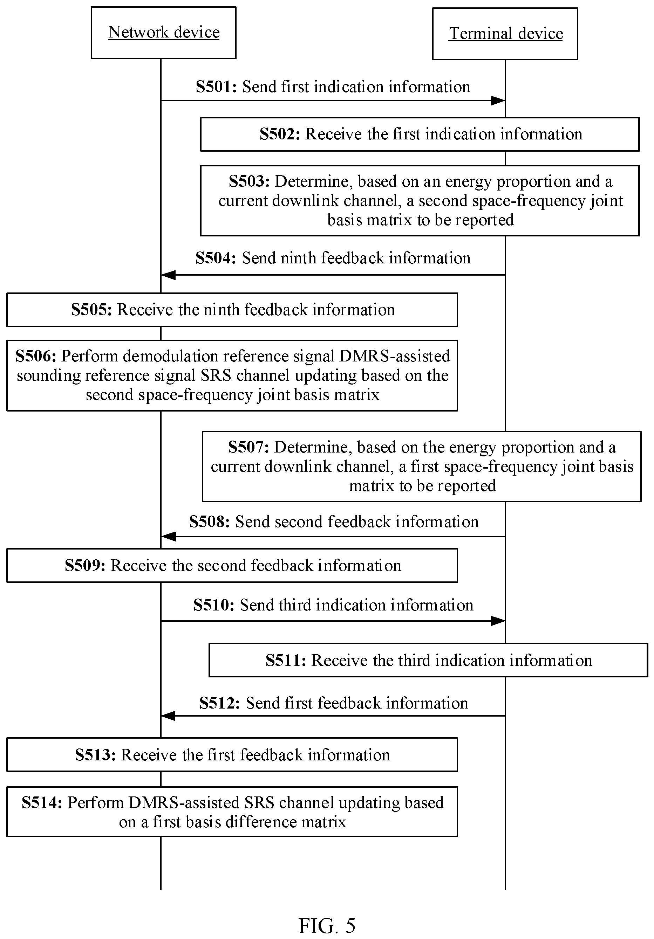

FIG. 5 shows a communication method according to an embodiment of this application. The communication method may be implemented based on the architecture shown in FIG. 1, FIG. 2, or FIG. 3, or may be implemented based on another architecture. The method includes at least an interaction procedure between two communication devices. For ease of understanding, the following uses an example in which one communication device is a network device and the other device is a terminal device for description. The method includes but is not limited to the following steps.

**Step S501:** The network device sends first indication information.

Specifically, the first indication information indicates a reference energy proportion, and the reference energy proportion is used to represent an energy proportion of space-frequency joint bases projected onto a downlink channel. The reference energy proportion is a reference value or a recommended value provided by the network device. That is, from a perspective of the network device, it is expected that a requirement of the reference energy proportion between the space-frequency joint bases of the terminal device and the downlink channel is met.

Optionally, the first indication information may be sent in a form of downlink control information (Downlink Control Information, DCI), or may be sent in a form of radio resource control (Radio Resource Control, RRC), or may be sent in a form of another type of signaling or data. This is not limited herein.

**Step S502:** The terminal device receives the first indication information.

Specifically, after receiving the first indication information, the terminal device may obtain the reference energy proportion through parsing.

Optionally, the reference energy proportion may be alternatively specified in a protocol, and does not need to be indicated by the network device to the terminal device.

**Step S503:** The terminal device determines, based on the energy proportion and a current downlink channel, a second space-frequency joint basis matrix to be reported.

In this embodiment of this application, the second space-frequency joint basis matrix includes a plurality of space-frequency joint bases. The space-frequency joint bases may be space-frequency joint statistical bases, or may be space-frequency joint non-statistical bases. Examples are provided below for illustration.

For example, the space-frequency joint bases may be space-frequency joint non-statistical bases. The terminal device may vectorize a quantity of downlink pilot reference signal (Channel State Information-Reference Signal, CSI-RS) ports and a quantity of resource blocks (Resource Block, RB) of a reporting band into a dimension to obtain a corresponding column vector of a downlink channel H. The space-frequency joint basis is calculated based on a covariance matrix R = *HH*^{H} of the downlink channel and an eigendecomposition process. A space-frequency joint non-statistical basis matrix is obtained in this case. The space-frequency joint non-statistical basis matrix includes a plurality of space-frequency joint non-statistical bases, for example, includes space-frequency joint non-statistical bases *U*₁, *U*₂, ... , *U_{N}*, where N is a positive integer. For ease of subsequent description, the space-frequency joint non-statistical basis matrix obtained in this phase may be referred to as an initial space-frequency joint basis matrix.

For another example, the space-frequency joint bases may be space-frequency joint statistical bases. The terminal device calculates a space-frequency statistical covariance matrix R̅̅̅ = αR̅̅̅' + (1 - α)*R* of the channel, where R̅̅̅' is a space-frequency statistical covariance matrix of a channel obtained through historical downlink CSI-RS measurement, and α is a weighting coefficient used to indicate whether the calculated space-frequency statistical covariance matrix is more affected by a historical covariance matrix or a real-time covariance matrix. The terminal device performs eigendecomposition on the space-frequency statistical covariance matrix R̅ to obtain a space-frequency joint statistical basis matrix, where the space-frequency joint statistical basis matrix includes a plurality of space-frequency joint statistical bases, for example, includes space-frequency joint statistical bases *U*₁, *U*₂, ... , *U_{N}*, where N is a positive integer. For ease of subsequent description, the space-frequency joint statistical basis matrix obtained in this phase may be referred to as an initial space-frequency joint basis matrix.

The initial space-frequency joint basis matrix obtained in the foregoing manner includes global space-frequency joint bases. Next, the first *P* space-frequency joint bases *U*₁, *U*₂, ... , *U_{P}* corresponding to the largest eigenvalues need to be selected from the global space-frequency joint bases based on the reference energy proportion. For example, a quotient of a sum of squared magnitudes of the P space-frequency joint bases *U*₁, *U*₂, ... , *U_{P}* divided by a sum of squared magnitudes of elements of the downlink channel needs to be greater than the reference energy proportion. In other words, a value of the reference energy proportion affects the value of P, and P is an integer greater than 0 and less than N. In this embodiment of this application, a matrix formed by the first P largest space-frequency joint bases *U*₁, *U*₂, ... , *U_{P}* is the second space-frequency joint basis matrix.

Optionally, the terminal device may alternatively calculate a second vector matrix, where the second vector matrix is a vector matrix formed by eigenvectors *Σ*₁, *Σ*₂, ..., *Σ*_{P} obtained by combining, on diagonal elements, eigenvalues respectively corresponding to the space-frequency joint bases *U*₁, *U*₂, ... , *U_{P}* in the second space-frequency joint basis matrix.

Optionally, the terminal device may alternatively record a quantity of the space-frequency joint bases *U*₁, *U*₂, ... , *U_{P}* in the second space-frequency joint basis matrix. For ease of description, the quantity may be referred to as a second quantity. It may be understood that the second quantity is P.

Optionally, in a time division duplex (Time division duplex, TDD) system with uplink-downlink channel reciprocity, the foregoing "downlink" channel may also be obtained using an uplink channel acquired through measurement. In other words, the space-frequency joint basis matrix may be obtained based on the uplink channel.

**Step S504:** The terminal device sends ninth feedback information.

Specifically, the ninth feedback information includes the second space-frequency joint basis matrix.

Optionally, the ninth feedback information may further include a first vector matrix and/or the second quantity.

**Step S505:** The network device receives the ninth feedback information.

Specifically, after receiving the ninth feedback information, the network device may obtain the second space-frequency joint basis matrix through parsing.

Optionally, if the ninth feedback information includes the second quantity, the second quantity P may be obtained by parsing the ninth feedback information. Certainly, if the ninth feedback information does not carry the second quantity, but the network device needs to use the parameter of the second quantity, the second quantity may be directly determined based on a quantity of space-frequency joint bases included in the second space-frequency joint basis matrix obtained through parsing.

Optionally, if the ninth feedback information includes the second vector matrix, the second vector matrix may be obtained by parsing the ninth feedback information. In addition, if the ninth feedback information does not carry the second quantity, but the network device needs to use the parameter of the second quantity, the second quantity may be directly determined based on a quantity of eigenvectors included in the second vector matrix obtained through parsing.

**Step S506:** The network device performs a demodulation reference signal DMRS-assisted sounding reference signal SRS channel updating based on the second space-frequency joint basis matrix.

Optionally, A DMRS-assisted SRS channel updating may be performed based on the second space-frequency joint basis matrix and the second vector matrix. In a process of performing A DMRS-assisted SRS channel updating, a corresponding algorithm is used. The second space-frequency joint basis matrix and/or the second vector matrix may be used as a part of input parameters of the algorithm. The algorithm may also be predefined, and a specific form and content of the algorithm are not limited herein.

Optionally, the second space-frequency joint basis matrix and/or the second vector matrix may be used for another operation such as channel measurement or channel estimation.

**Step S507:** The terminal device determines, based on the energy proportion and a current downlink channel, a first space-frequency joint basis matrix to be reported.

In a possible implementation, because the quotient of the sum of the squared magnitudes of the space-frequency joint bases divided by the sum of the squared magnitudes of the elements of the downlink channel needs to be greater than the reference energy proportion, and an execution moment of step S507 is lagging behind that of step S503, due to time impact, the downlink channel in step S507 is different from the downlink channel in step S503. Therefore, to keep the quotient of the sum of the squared magnitudes of the space-frequency joint bases divided by the sum of the squared magnitudes of the elements of the downlink channel greater than the reference energy proportion, required space-frequency joint bases also need to change accordingly. Specifically, the initial space-frequency joint basis matrix determined in step S503 may be used, and the first *S* space-frequency joint bases *U*₁, *U*₂, ... , *U_{S}* corresponding to the largest eigenvalues are selected from the initial space-frequency joint basis matrix, so that a quotient of a sum of squared magnitudes of the S space-frequency joint bases *U*₁*, U*₂, *..., U_{S}* divided by a sum of squared magnitudes of elements of a current downlink channel (different from that in step S503) is greater than the reference energy proportion. In this embodiment of this application, a matrix formed by the first S largest space-frequency joint bases *U*₁*, U*₂, ... , *U_{S}* is the first space-frequency joint basis matrix.

In another possible implementation, the initial space-frequency joint basis matrix obtained through calculation in step S503 may not be used, but eigendecomposition is performed again based on the current downlink channel (different from the downlink channel in step S503) to obtain a new initial space-frequency joint basis matrix. For a specific principle, refer to step S503. Details are not described herein again. Then, the first S space-frequency joint bases *U*₁*, U*₂, ... , *U_{S}* corresponding to the largest eigenvalues are selected from the new initial space-frequency joint basis matrix, so that a quotient of a sum of squared magnitudes of the S space-frequency joint bases *U*₁*, U*₂, ... , *U_{S}* divided by a sum of squared magnitudes of elements of a current downlink channel (different from that in step S503) is greater than the reference energy proportion. In this embodiment of this application, a matrix formed by the first S largest space-frequency joint bases *U*₁*, U*₂, ... , *U_{S}* is the first space-frequency joint basis matrix.

Optionally, the terminal device may alternatively calculate the first vector matrix, where the first vector matrix is a vector matrix formed by eigenvectors *Σ*₁*, Σ*₂, ..., *Σ*_{S} obtained by combining, on diagonal elements, eigenvalues respectively corresponding to the space-frequency joint bases *U*₁*, U*₂, ..., *U_{S}* in the first space-frequency joint basis matrix.

Optionally, the terminal device may alternatively record a quantity of the space-frequency joint bases *U*₁*, U*₂, ... , *U_{S}* in the first space-frequency joint basis matrix. For ease of description, the quantity may be referred to as a first quantity. It may be understood that the first quantity is S.

Step S508: The terminal device sends second feedback information.

The second feedback information indicates a quantity of space-frequency joint bases in the first basis difference matrix, and the first basis difference matrix includes a difference between the first space-frequency joint basis matrix and a reported second space-frequency joint basis matrix. For example, if the first space-frequency joint basis matrix includes S space-frequency joint bases *U*₁*, U*₂, *..., U_{S},* and the second space-frequency joint basis matrix includes S space-frequency joint bases *U*₁*, U*₂, *..., U_{P},* a difference between the two includes *U*_{*P*+1}, *U*_{*P*+2}, ..., *U_{S}.* Therefore, the first basis difference matrix includes the space-frequency joint bases *U*_{*P*+1}, *U*_{*P*+2}, ... , *U_{S}.*

Correspondingly, a quantity of space-frequency joint bases in the first basis difference matrix including the space-frequency joint bases *U*_{*P*+1}*, U*_{*P*+2}, ... , *U_{S}* is (S-P).

**Step S509:** The network device receives the second feedback information.

After receiving the second feedback information, the network device may obtain, through parsing, the quantity (S-P) of the space-frequency joint bases in the first basis difference matrix.

**Step S510:** The network device sends third indication information.

The third indication information indicates a first time-frequency resource, and the first time-frequency resource is used to carry the first basis difference matrix.

In an optional implementation, a size of the first time-frequency resource may be determined based on the foregoing obtained quantity of space-frequency joint bases in the first basis difference matrix. For example, a larger quantity indicates a larger first time-frequency resource, and a smaller quantity indicates a smaller first time-frequency resource.

In another optional implementation, the size of the first time-frequency resource is specified in a protocol, or is determined by the network device based on another parameter. For example, the terminal device directly requests a time-frequency resource of a specific size. After receiving the request of the terminal device, the network device uses the request of the terminal device as one of references for determining the first time-frequency resource. Certainly, another determining manner may be alternatively used. This is not limited herein.

For example, the first time-frequency resource may be a physical uplink control channel (Physical Uplink Control Channel, PUCCH) resource (for example, one or more PUCCH resources), a (for example, one or more) physical uplink shared channel (Physical Uplink Shared Channel, PUSCH) resource (for example, one or more PUSCH resources), or a resource of another type. Optionally, the third indication information may be sent in a form of DCI, or may be sent in a form of RRC, or may be sent in a form of another type of signaling or data. This is not limited herein.

**Step S511:** The terminal device receives the third indication information.

After receiving the third indication information, the terminal device may parse the third indication information, to determine the first time-frequency resource.

Optionally, the first indication information may be sent in a form of DCI, or may be sent in a form of RRC, or may be sent in a form of another type of signaling or data. This is not limited herein.

Optionally, the terminal device may alternatively determine the first time-frequency resource in another manner. For example, the first time-frequency resource is specified in a protocol in advance. In this case, steps S508, S509, S510, and S511 do not need to be performed.

**Step S512:** The terminal device sends first feedback information.

The first feedback information includes a first basis difference matrix. As described above, if the first space-frequency joint basis matrix includes S space-frequency joint bases *U*₁, *U*₂, ... , *U_{S}*, and the second space-frequency joint basis matrix includes S space-frequency joint bases *U*₁, *U*₂, ... , *U_{P}*, a difference between the two includes *U*_{*P*+1}, *U*_{*P*+2}, ... , *U_{S}.* Therefore, the first basis difference matrix includes the space-frequency joint bases *U*_{*P*+1}, *U*_{*P*+2}, ... , *U_{S}.*

Therefore, the first basis difference matrix carried in the first feedback information may specifically include the space-frequency joint bases *U_{P}*+1, *U*_{*P*+2}, ... , *U_{S}.*

Optionally, the first feedback information may further include a first vector difference matrix, the first vector difference matrix is a matrix formed by a difference between a first vector matrix and a second vector matrix, the first vector matrix is a vector matrix obtained by combining, on diagonal elements, eigenvalues respectively corresponding to space-frequency joint bases in the first space-frequency joint basis matrix, and the second vector matrix is a vector matrix obtained by combining, on diagonal elements, eigenvalues respectively corresponding to space-frequency joint bases in the second space-frequency joint basis matrix. In essence, the first vector difference matrix is also a vector matrix obtained by combining, on diagonal elements, eigenvalues respectively corresponding to the space-frequency joint bases *U*_{*P*+1}, *U*_{*P*+2}, ... , *U_{S}* in the first basis difference matrix.

Optionally, if the first time-frequency resource is obtained in the foregoing, the first feedback information may be sent on the first time-frequency resource.

In a possible implementation, the terminal device may periodically send the first feedback information. Specifically, a time period based on which the first feedback information is generated and sent may be configured by a network side (for example, the network device), or may be directly specified in advance using a protocol.

In another possible implementation, the terminal device may further generate and send the first feedback information when a preconfigured reporting condition is met. For example, the terminal device generates and sends the first feedback information when it is found that the downlink channel changes or a change amount of the downlink channel exceeds a preset threshold. Specific content of the reporting condition may be configured as required, and is not limited herein. In addition, the reporting condition may be configured by the network side (for example, the network device), or may be directly pre-specified by using a protocol.

In another optional implementation, the network device may further send second indication information to the terminal device, where the second indication information indicates to report the first feedback information. Correspondingly, the terminal device receives the second indication information, and the terminal device may learn, based on the indication information, that the first feedback information needs to be reported. Therefore, the terminal device performs an operation of reporting the first feedback information. Certainly, some preceding procedures (if necessary) required before the first feedback information is reported, for example, an interaction procedure of the second feedback information and the third indication information, may be performed first.

**Step S513:** The network device receives the first feedback information.

Specifically, after receiving the first feedback information, the network device may obtain the first basis difference matrix through parsing. Optionally, if the first feedback information includes the first vector difference matrix, the first vector difference matrix may be obtained by parsing the first feedback information.

In an optional solution, the first feedback information may directly include the first space-frequency joint basis matrix and/or the first vector matrix, and the two pieces of information can directly improve the performance of subsequent DMRS-assisted SRS channel updating.

**Step S514:** The network device performs DMRS-assisted SRS channel updating based on the first basis difference matrix.

Specifically, the network device may determine the first space-frequency joint basis matrix based on the first basis difference matrix and the foregoing obtained second space-frequency joint basis matrix. If the first feedback information includes the first vector difference matrix, the network device may further determine the first vector matrix based on the first vector difference matrix and the foregoing obtained second vector matrix.

Then, the network device may perform DMRS-assisted SRS channel updating based on the first space-frequency joint basis matrix.

Optionally, DMRS-assisted SRS channel updating may be performed based on the first space-frequency joint basis matrix and the first vector matrix. In a process of performing DMRS-assisted SRS channel updating, a corresponding algorithm is used. The first space-frequency joint basis matrix and/or the first vector matrix may be used as a part of input parameters of the algorithm. The algorithm may also be predefined, and a specific form and content of the algorithm are not limited herein.

Optionally, the first space-frequency joint basis matrix and/or the first vector matrix may be used for another operation such as channel measurement or channel estimation.

In this embodiment of this application, steps S501 to S514 are steps of reporting a space-frequency joint basis matrix and/or a vector matrix within a long period. Within the long period, steps S503 to S506 form a short period for reporting a space-frequency joint basis matrix and/or a vector matrix, and steps S507 to S514 are another short period for reporting a space-frequency joint basis matrix and/or a vector matrix. Certainly, other short periods may exist. In other words, a long reporting period includes a plurality of short reporting periods, and a reference energy proportion sent within a long reporting period may be used within all short periods of the long period. Optionally, different long periods may separately indicate reference energy proportions that need to be used within the current period. In other words, different reference energy proportions may be used within different long periods. Optionally, within a long period, the initial space-frequency joint basis matrix may be calculated only once, and short periods within the long period may share a same initial space-frequency joint basis matrix. In addition, a period length of the long period and a period length of each of the short periods may be set according to an actual requirement, which is not limited herein.

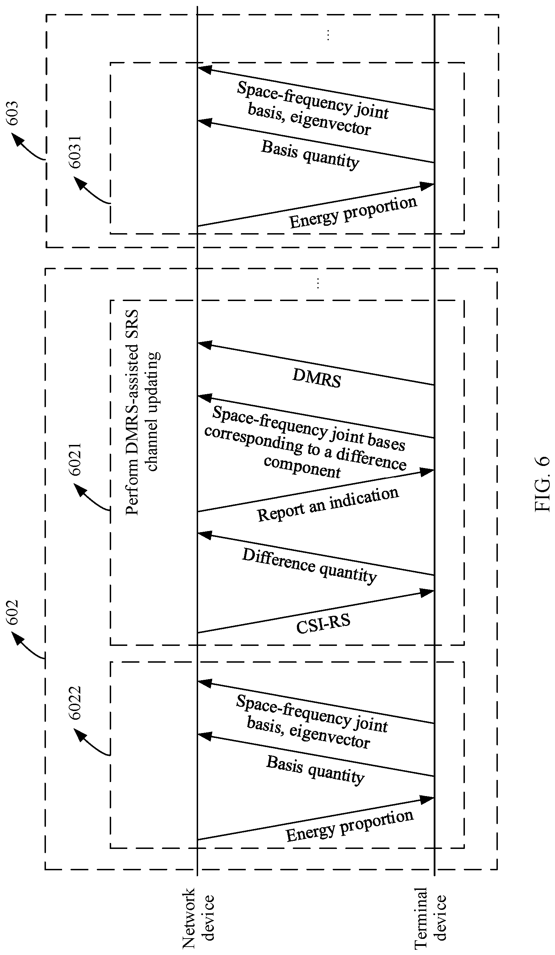

FIG. 6 is a schematic flowchart of another communication method according to an embodiment of this application. The method is an optional case. A core idea of the method is substantially the same as a core idea of the method shown in FIG. 5. The following briefly describes a procedure shown in FIG. 6. A network device indicates a reference energy proportion, and a terminal device determines, based on the reference energy proportion, a quantity of space-frequency joint bases (referred to as a basis quantity for short) in a space-frequency joint basis matrix to be reported, and then reports the basis quantity to the network device. The terminal device further reports the determined space-frequency joint basis matrix to the network device (optionally, may further report an eigenvector matrix). Optionally, a time-frequency resource for reporting the space-frequency joint basis matrix may be configured by a protocol, or may be indicated by the network device, for example, determined based on a quantity of reported bases. Next, the network device sends a channel state information-reference signal (Channel State Information-Reference Signal, CSI-RS) to the terminal device, so that the terminal device determines a current downlink channel (or the latest downlink channel). When determining, based on the current downlink channel, that the quantity of space-frequency joint bases is insufficient, the terminal device reports a difference quantity to the network device. If the network device determines, after receiving the difference quantity, that it is necessary to proceed to report space-frequency joint bases corresponding to the difference component, the network device sends a reporting indication to the terminal device. Correspondingly, the terminal device reports the space-frequency joint bases corresponding to the difference component. Then, the network device uses a DMRS based on the space-frequency joint bases corresponding to the difference component to update an SRS channel (for a detailed principle, refer to the foregoing description). Optionally, there may be a difference between a long period and a short period. For example, FIG. 6 shows two long periods 602 and 603, and the long period 602 includes a short period 6021. Although only one short period 6021 is shown, in practice, there may be other similar short periods, and each short period includes a reported difference component, space-frequency joint bases corresponding to the difference component, and a process of performing DMRS-assisted SRS channel updating based on the space-frequency joint bases corresponding to the difference component. In addition, each long period has a preceding process, for example, a preceding process 6022 in the long period 602 and a preceding process 6031 in the long period 603. Within different long periods, energy proportions indicated by the network device to the terminal device are generally different, but principles of procedures performed within different long periods are the same.

In the method shown in FIG. 5, a network device sends the reference energy proportion to a terminal device, and instead of using a fixed quantity of space-frequency joint bases, the terminal device determines, based on a current latest downlink channel status and the reference energy proportion, space-frequency joint bases required by the network device. Therefore, a quantity of obtained space-frequency joint bases is more accurate. Therefore, when the network device subsequently performs DMRS-assisted SRS channel updating based on the more accurate quantity of obtained space-frequency joint bases, the performance of channel extrapolation does not deteriorate, thereby improving the performance of DMRS-assisted SRS channel updating.

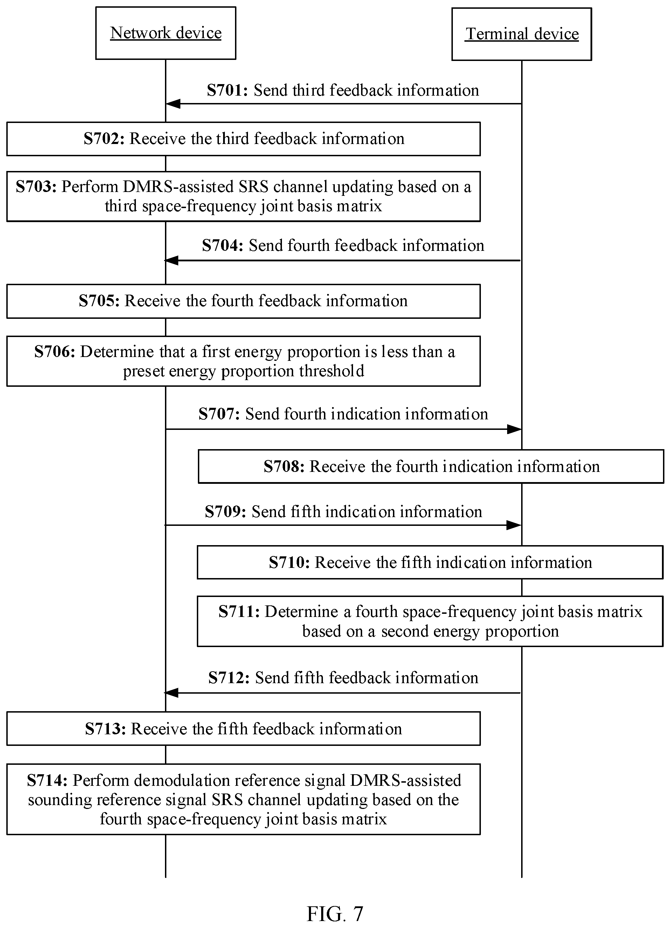

FIG. 7 shows a communication method according to an embodiment of this application. The communication method may be implemented based on the architecture shown in FIG. 1, FIG. 2, or FIG. 3, or may be implemented based on another architecture. The method includes at least an interaction procedure between two communication devices. For ease of understanding, the following uses an example in which one communication device is a network device and the other device is a terminal device for description. The method includes but is not limited to the following steps.

**Step S701:** The terminal device sends third feedback information.

The third feedback information includes a third space-frequency joint basis matrix, the third space-frequency joint basis matrix includes a plurality of space-frequency joint bases, and the space-frequency joint basis matrix is used by the network device to perform DMRS-assisted SRS channel updating.

In this embodiment of this application, the space-frequency joint bases may be space-frequency joint statistical bases, or may be space-frequency joint non-statistical bases.

For example, the space-frequency joint bases may be space-frequency joint non-statistical bases. The terminal device may vectorize a quantity of downlink pilot reference signal (Channel State Information-Reference Signal, CSI-RS) ports and a quantity of resource blocks (Resource Block, RB) of a reporting band into a dimension to obtain a corresponding column vector of a downlink channel H. The space-frequency joint basis is calculated based on a covariance matrix R = *HH*^{H} of the downlink channel and an eigendecomposition process. A space-frequency joint non-statistical basis matrix is obtained in this case. The space-frequency joint non-statistical basis matrix includes a plurality of space-frequency joint non-statistical bases, for example, includes space-frequency joint non-statistical bases *U*₁, *U*₂, ... , *U_{N}*, where N is a positive integer. For ease of subsequent description, the space-frequency joint non-statistical basis matrix obtained in this phase may be referred to as an initial space-frequency joint basis matrix.

For another example, the space-frequency joint bases may be space-frequency joint statistical bases. The terminal device calculates a space-frequency statistical covariance matrix R̅ = αR̅' + (1 - α)*R* of the channel, where R̅' is a space-frequency statistical covariance matrix of a channel obtained through historical downlink CSI-RS measurement, and α is a weighting coefficient used to indicate whether the calculated space-frequency statistical covariance matrix is more affected by a historical covariance matrix or a real-time covariance matrix. The terminal device performs eigendecomposition on the space-frequency statistical covariance matrix R̅ to obtain a space-frequency joint statistical basis matrix, where the space-frequency joint statistical basis matrix includes a plurality of space-frequency joint statistical bases, for example, includes space-frequency joint statistical bases *U*₁, *U*₂, ... , *U_{N}*, where N is a positive integer. For ease of subsequent description, the space-frequency joint statistical basis matrix obtained in this phase may be referred to as an initial space-frequency joint basis matrix.

The initial space-frequency joint basis matrix obtained in the foregoing manner includes global space-frequency joint bases, and the third space-frequency joint basis matrix may be a portion of the initial space-frequency joint basis matrix. For example, if the network device indicates to the terminal device that Y space-frequency joint bases are required, a matrix formed by Y largest space-frequency joint bases in *U*₁, *U*₂, ... , *U_{N}* is the third space-frequency joint basis matrix. For another example, the network device indicates an energy proportion to the terminal device, to represent an energy proportion of space-frequency joint bases projected onto a current downlink channel. In this case, the terminal device derives P largest space-frequency joint bases in *U*₁, *U*₂, ... , *U_{N}* based on the energy proportion and the current downlink channel, and a matrix formed by the derived P space-frequency joint bases is the third space-frequency joint basis matrix. It should be noted that a principle of deriving the P largest space-frequency joint bases has been described above, and details are not described herein again. Certainly, the third space-frequency joint basis matrix may be determined in another manner. A specific manner is not limited herein.

Optionally, a vector matrix obtained by combining, on diagonal elements, eigenvalues corresponding to the space-frequency joint bases in the third space-frequency joint basis matrix may be further determined. For ease of description, the vector matrix may be referred to as a third vector matrix. The third feedback information may further include the third vector matrix.

**Step S702:** The network device receives the third feedback information.

After receiving the third feedback information, the network device may obtain the third space-frequency joint basis matrix through parsing. If the third feedback information includes the third vector matrix, the network device may further obtain the third vector matrix through parsing.

**Step S703:** The network device performs DMRS-assisted SRS channel updating based on the third space-frequency joint basis matrix. In a process of performing DMRS-assisted SRS channel updating, a corresponding algorithm is used. The third space-frequency joint basis matrix and/or the third vector matrix may be used as a part of input parameters of the algorithm. The algorithm may also be predefined, and a specific form and content of the algorithm are not limited herein.

Optionally, DMRS-assisted SRS channel updating may be performed based on the third space-frequency joint basis matrix and the third vector matrix.

Optionally, the third space-frequency joint basis matrix and/or the third vector matrix may be used for another operation such as channel measurement or channel estimation.

**Step S704:** The terminal device sends fourth feedback information.

The fourth feedback information indicates a first energy proportion, and the first energy proportion includes the energy proportion of the space-frequency joint bases projected onto the current downlink channel, for example, an energy proportion of a plurality of space-frequency joint bases in the third space-frequency joint basis matrix projected onto the current downlink channel. This may be a real-time energy proportion, and a value of the energy proportion varies as the current downlink channel changes.

There are a plurality of manners of indicating the first energy proportion. For example, a value of the first energy proportion, for example, 65%, is directly indicated. In this case, the fourth feedback information needs to include the parameter 65% of the first energy proportion. For another example, an index corresponding to the first energy proportion is indicated. As shown in Table 1, energy proportions of different values correspond to respective indexes. In this case, the fourth feedback information needs to include the index corresponding to the first energy proportion. If the first energy proportion is 65%, the corresponding index is 3. Therefore, the fourth feedback information includes an index value "3".

**Table 1**

| Energy proportion | Index |
|---|---|
| *a* ≥90% | 0 |
| 90% > *a* ≥80% | 1 |
| 80% > *a* ≥ 70% | 2 |
| *a* < 70% | 3 |

**Step S705:** The network device receives the fourth feedback information.

After receiving the fourth feedback information, the network device may obtain the first energy proportion through parsing. For example, if the fourth feedback information carries the first energy proportion, the network device may directly obtain, through parsing, the first energy proportion, for example, 65%. For another example, if the fourth feedback information carries an index value of the energy proportion, for example, "3", the network device may look up Table 1 to find that an energy proportion corresponding to the index "3" is 65%. Therefore, it may be determined that the first energy proportion reported by the terminal device is 65%. It may be understood that Table 1 that is the same as that on the terminal device is configured on the network device.

It should be noted that whether the fourth feedback information directly carries the energy proportion or carries the index corresponding to the energy proportion may be agreed in advance by the network device and the terminal device, or may be agreed directly in a manner specified in a protocol, or may be agreed by sending an indication to the terminal device by the network device. This is not specifically limited herein. In addition, when the indication is performed in an index manner, the index table (for example, Table 1) may be pre-specified in a protocol, or may be sent by the network device to the terminal device. This is not specifically limited herein.

**Step S706:** The network device determines that the first energy proportion is less than a preset energy proportion threshold.

Specifically, the preset energy proportion threshold is a preconfigured energy proportion used for reference comparison. Generally, when the space-frequency joint bases and the downlink channel meet the preset energy proportion threshold, the performance of DMRS-assisted SRS channel updating is generally relatively good. The preset energy proportion threshold may be set based on historical experience, or may be generated using a corresponding algorithm. This is not limited herein.

Generally, if the first energy proportion is less than the preset energy proportion threshold, the performance of DMRS-assisted SRS channel updating by the network device is not good, and the energy proportion needs to be updated. Because the energy proportion is an energy proportion of the space-frequency joint bases projected onto the downlink channel, the energy proportion may be optimized by adjusting the space-frequency joint bases. Therefore, the network device performs subsequent step S707.

**Step S707:** The network device sends fourth indication information.

The fourth indication information indicates to re-report a space-frequency joint basis matrix.

Optionally, the fourth indication information may be sent in a form of DCI, or may be sent in a form of RRC, or may be sent in a form of another type of signaling or data. This is not limited herein.

**Step S708:** The terminal device receives the fourth indication information.

After receiving the fourth indication information, the terminal device parses the fourth indication information, and may determine that the space-frequency joint basis matrix needs to be reported again.

**Step S709:** The network device sends fifth indication information.

The fifth indication information indicates a second energy proportion, and the second energy proportion includes the energy proportion of the space-frequency joint bases projected onto the current downlink channel. Optionally, the second energy proportion is an energy proportion required (or expected) by the network device. When the energy proportion is met, the performance of DMRS-assisted SRS channel updating by the network device is relatively good. The second energy proportion may be the foregoing preset energy proportion threshold, or may be an amount different from the preset energy proportion threshold, and is specifically determined according to an actual requirement.

The fifth indication information may carry a specific value of the second energy proportion, or may carry an index corresponding to the second energy proportion, to indicate the second energy proportion. Certainly, the second energy proportion may be indicated in another manner. This is not limited herein.

**Step S710:** The terminal device receives the fifth indication information.

After receiving the fifth indication information, the terminal device may determine the second energy proportion by parsing the fifth indication information.

It should be noted that, in addition to being configured by the network side (for example, the network device), the second energy proportion may be pre-specified in a protocol. This is not specifically limited in this embodiment of this application.

Optionally, the fifth indication information may be sent in a form of DCI, or may be sent in a form of RRC, or may be sent in a form of another type of signaling or data. This is not limited herein.

**Step S711:** The terminal device determines the fourth space-frequency joint basis matrix based on the second energy proportion.

With reference to the principle in step 701, the global space-frequency joint bases *U*₁, *U*₂, ... , *U_{E}* may be obtained based on the current downlink channel (which may be updated compared with the downlink channel in step S701), where E is a positive integer. Then, the first *F* space-frequency joint bases *U*₁, *U*₂, ... , *U_{F}* corresponding to the largest eigenvalues need to be selected from the global space-frequency joint bases based on the second energy proportion. For example, a quotient of a sum of squared magnitudes of the F space-frequency joint bases *U*₁, *U*₂, ... , *U_{F}* divided by a sum of squared magnitudes of elements of the downlink channel needs to be greater than the second energy proportion. F is an integer greater than 0 and less than E.

The first F largest space-frequency joint bases *U*₁, *U*₂, ... , *U_{F}* may be considered as a space-frequency joint basis matrix, namely, the fourth space-frequency joint basis matrix. Further, a fourth vector matrix may be obtained by combining, on diagonal elements, eigenvalues *Σ*₁, *Σ*₂, ..., and *Σ*_{F} that correspond to the fourth space-frequency joint basis matrix, namely, respectively corresponding to the first F largest space-frequency joint bases *U*₁, *U*₂, ... , *U_{F}*.

**Step S712:** The terminal device sends fifth feedback information.

The fifth feedback information includes the fourth space-frequency joint basis matrix. Optionally, the fifth feedback information further includes the fourth vector matrix.

**Step S713:** The network device receives the fifth feedback information.

The network device may obtain the fourth space-frequency joint basis matrix by parsing the fifth feedback information. If the fifth feedback information includes the fourth vector matrix, the network device may further obtain the fourth vector matrix through parsing.

Optionally, the terminal device may send sixth feedback information instead of sending the fifth feedback information. Correspondingly, the network device receives the sixth feedback information, where the sixth feedback information includes a difference matrix, and the difference matrix includes a difference between space-frequency joint bases in the fourth space-frequency joint basis matrix and space-frequency joint bases in the third space-frequency joint basis matrix. Then, the network device may determine the fourth space-frequency joint basis matrix based on the difference matrix and the foregoing obtained third space-frequency joint basis matrix. Optionally, the sixth feedback information may further include a second vector difference matrix obtained by combining, on diagonal elements, eigenvalues respectively corresponding to space-frequency joint bases in the difference matrix. In this case, the network device may parse the sixth feedback information to obtain a sixth vector difference matrix, and then determine the fourth vector matrix based on the sixth vector difference matrix and the foregoing third vector matrix.

**Step S714:** The network device performs a demodulation reference signal DMRS-assisted sounding reference signal SRS channel updating based on the fourth space-frequency joint basis matrix.

Optionally, DMRS-assisted SRS channel updating may be performed based on the fourth space-frequency joint basis matrix and the fourth vector matrix. In a process of DMRS-assisted SRS channel updating, a corresponding algorithm is used. The fourth space-frequency joint basis matrix and/or the fourth vector matrix may be used as a part of input parameters of the algorithm. The algorithm may also be predefined, and a specific form and content of the algorithm are not limited herein.

Optionally, the fourth space-frequency joint basis matrix and/or the fourth vector matrix may be used for another operation such as channel measurement or channel estimation.

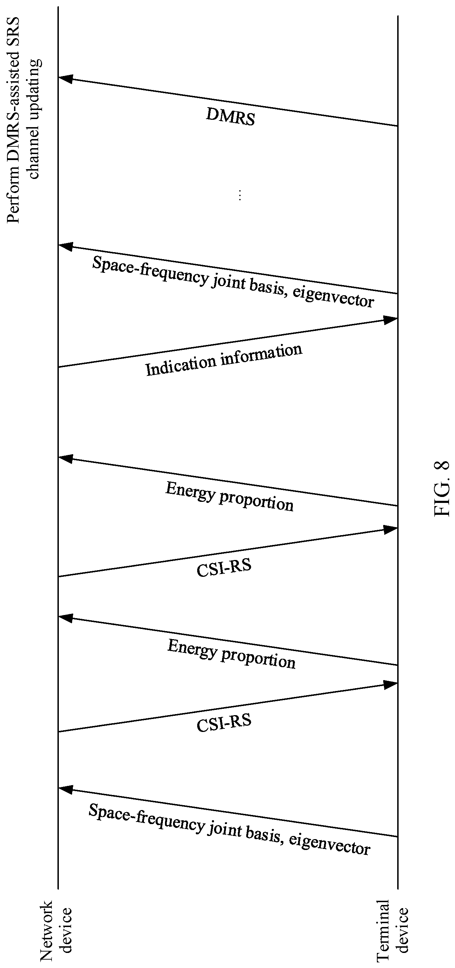

FIG. 8 is a schematic flowchart of another communication method according to an embodiment of this application. The method is an optional case. A core idea of the method is substantially the same as a core idea of the method shown in FIG. 7. The following briefly describes a procedure shown in FIG. 8. A terminal device reports a space-frequency joint basis matrix (optionally, may further report an eigenvector matrix) to a network device, and the network device sends a channel state information-reference signal (Channel State Information-Reference Signal, CSI-RS) to the terminal device, so that the terminal device determines a current downlink channel (or the latest downlink channel). The terminal device recalculates an energy proportion based on the downlink channel, and reports the energy proportion. A process of calculating and reporting the energy proportion may be performed periodically. Each time the energy proportion is reported, the network device may determine whether the reported energy proportion meets a requirement of the network device. If the reported energy proportion does not meet the requirement, the network device sends indication information to the terminal device, to indicate to re-report the space-frequency joint basis matrix. After receiving the indication information, the terminal device re-reports the space-frequency joint basis matrix (optionally, may further report an eigenvector matrix). Correspondingly, after receiving the new space-frequency joint basis matrix (optionally, may further report an eigenvector matrix), the network device may perform DMRS-assisted SRS channel updating based on the information (for a detailed principle, refer to the foregoing description).

In the method shown in FIG. 7, when reporting a space-frequency joint basis matrix to a network device, a terminal device also reports the first energy proportion determined based on the current space-frequency joint basis matrix and the current channel, so that the network device determines whether the current first energy proportion meets a requirement, to determine how to perform subsequent adjustment, so that the network device obtains an appropriate quantity of space-frequency joint bases, thereby improving the performance of DMRS-assisted SRS channel updating.

A communication apparatus provided in an embodiment of this application is described below.

In this application, the communication apparatus is divided into functional modules based on the foregoing method embodiments. For example, each functional module may be divided to each corresponding function, or two or more functions may be integrated into one processing module. The integrated module may be implemented in a form of hardware, or may be implemented in a form of a software functional module. It should be noted that, in this application, module division is an example, and is merely a logical function division. In actual implementation, another division manner may be used.

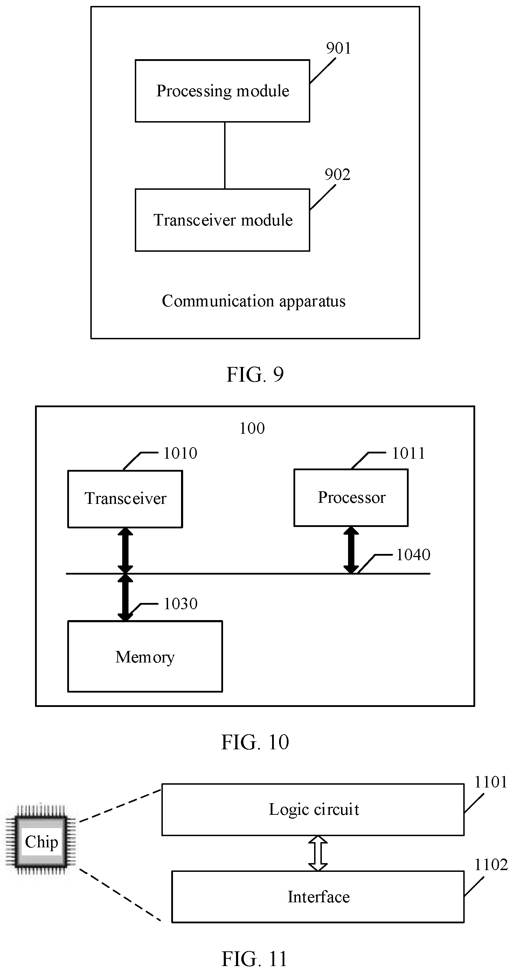

The following describes in detail communication apparatuses in embodiments of this application with reference to FIG. 9 to FIG. 11.

FIG. 9 is a diagram of a structure of a communication apparatus according to an embodiment of this application. As shown in FIG. 9, the communication apparatus includes a processing module 901 and a transceiver module 902. The transceiver module 902 may implement a corresponding communication function, and the processing module 901 is configured to process data. For example, the transceiver module 902 may also be referred to as an interface, a communication interface, a communication module, or the like.

In some embodiments of this application, the communication apparatus may be configured to perform an action performed by the transmitting end in the foregoing method embodiments. For example, the transmitting end may be a device or a chip, a functional module, or the like that can be disposed in the device. The transceiver module 902 is configured to perform a receiving/sending-related operation of the transmitting end in the foregoing method embodiments. The processing module 901 is configured to perform a processing-related operation of the transmitting end in the foregoing method embodiments. The processing module 901 may perform a corresponding operation by invoking a computer program, or may perform a corresponding operation using a corresponding hardware circuit. The transceiver module 902 may independently perform receiving and sending operations, or may perform corresponding receiving and sending operations under control of the processing module 901.

Case 1: For example, the communication apparatus shown in FIG. 9 may be the terminal device shown in FIG. 5 or a component in the terminal device, and the processing module 901 and the transceiver module 902 in the communication apparatus may separately perform the following operations:
The processing module 901 is configured to obtain first indication information, where the first indication information indicates a reference energy proportion of space-frequency joint bases projected onto a downlink channel.

The processing module 901 is configured to determine, based on the energy proportion and a current downlink channel, a first space-frequency joint basis matrix to be reported.

The transceiver module 902 is configured to send first feedback information, where the first feedback information includes the first space-frequency joint basis matrix or a first basis difference matrix, and the first basis difference matrix includes a difference between the first space-frequency joint basis matrix and a reported second space-frequency joint basis matrix.

In the foregoing method, a network device sends the reference energy proportion to a terminal device, and instead of using a fixed quantity of space-frequency joint bases, the terminal device determines, based on a current latest downlink channel status and the reference energy proportion, space-frequency joint bases required by the network device. Therefore, a quantity of obtained space-frequency joint bases is more accurate. Therefore, when the network device subsequently performs DMRS-assisted SRS channel updating based on the more accurate quantity of obtained space-frequency joint bases, performance of channel extrapolation does not deteriorate, thereby improving the performance of DMRS-assisted SRS channel updating. Optionally, during reporting of a space-frequency joint basis matrix, instead of a complete space-frequency joint basis matrix, a difference from history, namely, the first difference basis matrix, may be alternatively reported. This reduces time-frequency resources occupied during reporting, thereby also improving reporting efficiency.

In a possible implementation, the first feedback information further includes a first vector difference matrix, the first vector difference matrix is a matrix formed by a difference between a first vector matrix and a second vector matrix, the first vector matrix is a vector matrix obtained by combining, on diagonal elements, eigenvalues respectively corresponding to space-frequency joint bases in the first space-frequency joint basis matrix, and the second vector matrix is a vector matrix obtained by combining, on diagonal elements, eigenvalues respectively corresponding to space-frequency joint bases in the second space-frequency joint basis matrix.

In this implementation, in addition to the difference of the space-frequency joint basis matrix, a difference component of an eigenvector matrix, namely, the first vector difference matrix, may be further reported, so that time-frequency resources occupied during reporting are further reduced, thereby also improving reporting efficiency.

In another possible implementation, in the aspect of determining, based on the energy proportion and the current downlink channel, the first space-frequency joint basis matrix to be reported, the processing module 901 is further configured to:
select the first space-frequency joint basis matrix from an initial space-frequency joint basis matrix based on the energy proportion, where the reported second space-frequency joint basis matrix is also selected from the initial space-frequency joint basis matrix, and the initial space-frequency joint basis matrix is obtained through eigendecomposition on a space-frequency statistical covariance matrix of the downlink channel.

In this implementation, eigendecomposition does not need to be performed on the downlink channel again to determine the first space-frequency joint basis matrix. Instead, the previously generated initial space-frequency joint basis matrix is used to directly select the first space-frequency joint basis matrix from the initial space-frequency joint basis matrix. Because the downlink channel is not re-decomposed, computational overheads are reduced, and efficiency of determining the first space-frequency joint basis matrix is also improved.

In another possible implementation,
the transceiver module 902 is further configured to receive second indication information, where the second indication information indicates to report the first feedback information.

It may be understood that the first feedback information is reported only when the second indication information sent by the network device is received. This avoids ineffective reporting, thereby reducing communication overheads and computational overheads of the network device and the terminal device.

In another possible implementation,
the transceiver module 902 is further configured to receive third indication information, where the third indication information indicates a first time-frequency resource, and the first time-frequency resource is used to carry the first basis difference matrix.

In another possible implementation,
the transceiver module 902 is further configured to send second feedback information, where the second feedback information indicates a quantity of space-frequency joint bases in the first basis difference matrix.

In the method, the quantity of the space-frequency joint bases in the first basis difference matrix is indicated to the network device. In this way, the network device can allocate a specific time-frequency resource in a targeted manner based on the quantity of the space-frequency joint bases, thereby avoiding shortage or waste of time-frequency resources.

In another possible implementation, in the aspect of obtaining the first indication information, the processing module 901 is further configured to trigger the transceiver module 902 to receive the first indication information.

In this implementation, the terminal device may directly receive the first indication information from the network device.

Case 2: FIG. 9 is reused. In some other embodiments of this application, for example, the communication apparatus shown in FIG. 9 may be the network device shown in FIG. 5 or a component in the network device, and the processing module 901 and the transceiver module 902 in the communication apparatus may separately perform the following operations:
The transceiver module 902 is configured to send first indication information, where the first indication information indicates a reference energy proportion of space-frequency joint bases projected onto a downlink channel.

The transceiver module 902 is configured to receive first feedback information, where the first feedback information includes a first space-frequency joint basis matrix or a first basis difference matrix, the first basis difference matrix includes a difference between the first space-frequency joint basis matrix and a reported second space-frequency joint basis matrix, and the reference energy proportion is used to determine the first space-frequency joint basis matrix.

In the foregoing method, a network device sends the reference energy proportion to a terminal device, and instead of using a fixed quantity of space-frequency joint bases, the terminal device determines, based on a current latest downlink channel status and the reference energy proportion, space-frequency joint bases required by the network device. Therefore, a quantity of obtained space-frequency joint bases is more accurate. Therefore, when the network device subsequently performs DMRS-assisted SRS channel updating based on the more accurate quantity of obtained space-frequency joint bases, the performance of channel extrapolation does not deteriorate, thereby improving the performance of DMRS-assisted SRS channel updating. Optionally, during reporting of a space-frequency joint basis matrix, instead of a complete space-frequency joint basis matrix, a difference from history, namely, the first difference basis matrix, may be alternatively reported. This reduces time-frequency resources occupied during reporting, thereby also improving reporting efficiency.

In another possible implementation, the first feedback information further includes a first vector difference matrix, the first vector difference matrix is a matrix formed by a difference between a first vector matrix and a second vector matrix, the first vector matrix is a vector matrix obtained by combining, on diagonal elements, eigenvalues respectively corresponding to space-frequency joint bases in the first space-frequency joint basis matrix, and the second vector matrix is a vector matrix obtained by combining, on diagonal elements, eigenvalues respectively corresponding to space-frequency joint bases in the second space-frequency joint basis matrix.

In this implementation, in addition to the difference of the space-frequency joint basis matrix, a difference component of an eigenvector matrix, namely, the first vector difference matrix, may be further reported, so that time-frequency resources occupied during reporting are further reduced, thereby also improving reporting efficiency.

In another possible implementation,
the transceiver module 902 is further configured to send second indication information, where the second indication information indicates to report the first feedback information.

It may be understood that the terminal device can report the first feedback information only when the second indication information indicates reporting. This avoids ineffective reporting, thereby reducing communication overheads and computational overheads of the network device and the terminal device.

In another possible implementation,
the processing module 901 is further configured to determine that a condition for continuing to report the first feedback information is met.

It may be understood that a subsequent procedure of reporting the first feedback information is triggered only when it is determined that the first feedback information can be reported, thereby reducing communication overheads and computational overheads of the network device and the terminal device.

In another possible implementation,
the transceiver module 902 is further configured to send third indication information, where the third indication information indicates a first time-frequency resource, and the first time-frequency resource is used to carry the first basis difference matrix.

In another possible implementation,
the transceiver module 902 is further configured to receive second feedback information, where the second feedback information indicates a quantity of space-frequency joint bases in the first basis difference matrix.

In the method, the quantity of the space-frequency joint bases in the first basis difference matrix is indicated to the network device. In this way, the network device can allocate a specific time-frequency resource in a targeted manner based on the quantity of the space-frequency joint bases, thereby avoiding shortage or waste of time-frequency resources.

In another possible implementation,
the processing module 901 is further configured to perform a demodulation reference signal DMRS-assisted sounding reference signal SRS channel updating based on the first basis difference matrix.

It may be understood that the first space-frequency joint basis matrix may be determined based on the first basis difference matrix and the existing second space-frequency joint basis matrix. Because the first space-frequency joint basis matrix is a relatively accurate space-frequency joint basis matrix, the performance of DMRS-assisted SRS channel updating based on the first space-frequency joint basis matrix is good.

Case 3: FIG. 9 is reused. In some other embodiments of this application, for example, the communication apparatus shown in FIG. 9 may be the terminal device shown in FIG. 7 or a component in the terminal device, and the processing module 901 and the transceiver module 902 in the communication apparatus may separately perform the following operations:
The transceiver module 902 is configured to send third feedback information, where the third feedback information includes a third space-frequency joint basis matrix.

The transceiver module 902 is configured to send fourth feedback information, where the fourth feedback information indicates a first energy proportion, and the first energy proportion includes an energy proportion of space-frequency joint bases projected onto a current downlink channel.

In the foregoing method, when reporting a space-frequency joint basis matrix to a network device, a terminal device also reports the first energy proportion determined based on the current space-frequency joint basis matrix and the current channel, so that the network device determines whether the current first energy proportion meets a requirement, to determine how to perform subsequent adjustment, so that the network device obtains an appropriate quantity of space-frequency joint bases, thereby improving the performance of DMRS-assisted SRS channel updating.

In a possible implementation, the fourth feedback information includes a value of the first energy proportion.

In another possible implementation, the fourth feedback information includes an index corresponding to the first energy proportion.

It may be understood that indication in an index manner requires only small field overheads, so that communication resources can be saved and communication efficiency can be improved.

In another possible implementation,
the transceiver module 902 is configured to receive fourth indication information, where the fourth indication information indicates to re-report a space-frequency joint basis matrix; and
the transceiver module 902 is configured to send fifth feedback information, where the fifth feedback information includes a fourth space-frequency joint basis matrix.

It may be understood that re-reporting of the space-frequency joint basis matrix can meet the latest requirement of the network device, thereby improving the performance of DMRS-assisted SRS channel updating.

In another possible implementation,
the transceiver module 902 is configured to receive fourth indication information, where the fourth indication information indicates to re-report a space-frequency joint basis matrix; and
the transceiver module 902 is configured to send sixth feedback information, where the sixth feedback information includes a difference matrix, and the difference matrix includes a difference between space-frequency joint bases in a fourth space-frequency joint basis matrix and space-frequency joint bases in the third space-frequency joint basis matrix.

It may be understood that the difference matrix is reported to facilitate determining of the latest space-frequency joint basis matrix by the network device, to meet the latest requirement of the network device, thereby improving the performance of DMRS-assisted SRS channel updating.

In another possible implementation,
the transceiver module 902 is configured to receive fifth indication information, where the fifth indication information indicates a second energy proportion, and the second energy proportion includes the energy proportion of the space-frequency joint bases projected onto the current downlink channel; and
the processing module 901 is configured to determine the fourth space-frequency joint basis matrix based on the second energy proportion.

It may be understood that the fourth space-frequency joint basis matrix determined based on the second energy proportion newly indicated by the network device can better meet the latest requirement of the network device, thereby improving the performance of DMRS-assisted SRS channel updating.

In another possible implementation, the third feedback information further includes a third vector matrix, and the third vector matrix is a vector matrix obtained by combining, on diagonal elements, eigenvalues corresponding to the space-frequency joint bases in the third space-frequency joint basis matrix.

In another possible implementation, in the aspect of sending the fourth feedback information, the transceiver module 902 is further configured to periodically send the fourth feedback information.

It may be understood that the fourth feedback information is periodically sent, so that the network device can determine in a timely manner whether a current energy proportion meets a requirement, and determine whether a reported space-frequency joint basis matrix needs to be adjusted, thereby improving the performance of DMRS-assisted SRS channel updating.

Case 4: FIG. 9 is reused. In some other embodiments of this application, for example, the communication apparatus shown in FIG. 9 may be the network device shown in FIG. 7 or a component in the network device, and the processing module 901 and the transceiver module 902 in the communication apparatus may separately perform the following operations:
The transceiver module 902 is configured to receive third feedback information, where the third feedback information includes a third space-frequency joint basis matrix.

The transceiver module 902 is configured to receive fourth feedback information, where the fourth feedback information indicates a first energy proportion, and the first energy proportion includes an energy proportion of space-frequency joint bases projected onto a current downlink channel.

In the foregoing method, when reporting a space-frequency joint basis matrix to a network device, a terminal device also reports the first energy proportion determined based on the current space-frequency joint basis matrix and the current channel, so that the network device determines whether the current first energy proportion meets a requirement, to determine how to perform subsequent adjustment, so that the network device obtains an appropriate quantity of space-frequency joint bases, thereby improving the performance of DMRS-assisted SRS channel updating.

In a possible implementation, the fourth feedback information includes a value of the first energy proportion.

In another possible implementation, the fourth feedback information includes an index corresponding to the first energy proportion.

It may be understood that indication in an index manner requires only small field overheads, so that communication resources can be saved and communication efficiency can be improved.

In another possible implementation,
the transceiver module 902 is further configured to send fourth indication information, where the fourth indication information indicates to re-report a space-frequency joint basis matrix; and
the transceiver module 902 is further configured to receive fifth feedback information, where the fifth feedback information includes a fourth space-frequency joint basis matrix.

It may be understood that re-reporting of the space-frequency joint basis matrix can meet the latest requirement of the network device, thereby improving the performance of DMRS-assisted SRS channel updating.

In another possible implementation,
the transceiver module 902 is further configured to send fourth indication information, where the fourth indication information indicates to re-report a space-frequency joint basis matrix; and
the transceiver module 902 is further configured to receive sixth feedback information, where the sixth feedback information includes a difference matrix, and the difference matrix includes a difference between space-frequency joint bases in a fourth space-frequency joint basis matrix and space-frequency joint bases in the third space-frequency joint basis matrix.

It may be understood that the difference matrix is reported to facilitate determining of the latest space-frequency joint basis matrix by the network device, to meet the latest requirement of the network device, thereby improving the performance of DMRS-assisted SRS channel updating.

In another possible implementation,
the processing module 901 is configured to determine that the first energy proportion is less than a preset energy proportion threshold.

It may be understood that the network device triggers the operation of sending the fourth indication information only when determining that the first energy proportion is less than the preset energy proportion threshold, thereby avoiding waste of communication overheads and computational overheads caused by frequent sending or untimely sending.

In another possible implementation,
the transceiver module 902 is further configured to send fifth indication information, where the fifth indication information indicates a second energy proportion, the second energy proportion includes the energy proportion of the space-frequency joint bases projected onto the current downlink channel, and the second energy proportion is used to calculate the fourth space-frequency joint basis matrix.

In another possible implementation, the third feedback information further includes a vector matrix, and the vector matrix is a vector matrix obtained by combining, on diagonal elements, eigenvalues corresponding to the space-frequency joint bases in the third space-frequency joint basis matrix.

It may be understood that the terminal device determines the fourth space-frequency joint basis matrix based on the second energy proportion newly indicated by the network device can better meet the latest requirement of the network device, thereby improving the performance of DMRS-assisted SRS channel updating.

In another possible implementation,
the processing module 901 is further configured to perform a demodulation reference signal DMRS-assisted sounding reference signal SRS channel updating based on the fourth space-frequency joint basis matrix.

It may be understood that re-reporting of the fourth space-frequency joint basis matrix can meet the latest requirement of the network device, thereby improving the performance of DMRS-assisted SRS channel updating.

Specific descriptions of the transceiver module and the processing module shown in the foregoing embodiments are merely examples. For specific functions or steps performed by the transceiver module and the processing module, refer to the foregoing method embodiments. Details are not described herein again.

The foregoing describes the communication apparatus in embodiments of this application. The following describes a possible product form of the communication apparatus. Any form of product that has a function of the communication apparatus described in FIG. 9 falls within the scope of protection of embodiments of this application.

The following descriptions are merely examples, and a product form of the communication apparatus in embodiments of this application is not limited thereto.

In a possible implementation, in the communication apparatus shown in FIG. 9, the processing module 901 may be one or more processors, and the transceiver module 902 may be a transceiver; or the transceiver module 902 may be a sending module and a receiving module, the sending module may be a transmitter, and the receiving module may be a receiver, and the sending module and the receiving module are integrated into one device, for example, a transceiver. In embodiments of this application, the processor and the transceiver may be coupled, or the like. A connection manner between the processor and the transceiver is not limited in embodiments of this application. In a process of performing the foregoing method, a process of sending information in the foregoing method may be a process of outputting the information by the processor. When outputting the information, the processor outputs the information to a transceiver, so that the transceiver transmits the information. After the information is output by the processor, other processing may further need to be performed on the information before the information arrives at the transceiver. Similarly, a process of receiving information in the foregoing method may be a process of receiving the input information by the processor. When the processor receives the input information, the transceiver receives the information and inputs the information to the processor. Further, after the transceiver receives the information, other processing may need to be performed on the information before the information is input into the processor.

As shown in FIG. 10, the communication apparatus 100 includes one or more processors 1011 and a transceiver 1010. For example, the transceiver 1010 is configured to perform a function or a step implemented by the transceiver module 902 shown in FIG. 9, and the processor 1011 is configured to perform a function or a step implemented by the processing module 901 shown in FIG. 9. For specific descriptions of the processor 1011 and the transceiver 1010, refer to FIG. 9 or the method embodiments shown above. Details are not described herein again.

In the foregoing embodiments, for descriptions of related steps and information, refer to the descriptions in the foregoing method embodiments. Details are not described herein again.

In implementations of the communication apparatus shown in FIG. 10, the transceiver may include a receiver and a transmitter. The receiver is configured to perform a receiving function (or operation). The transmitter is configured to perform a transmitting function (or operation). In addition, the transceiver is configured to communicate with another device/apparatus through a transmission medium.

Optionally, the communication apparatus 100 may further include one or more memories 1030, configured to store program instructions and/or data. The memory 1030 is coupled to the processor 1011. The coupling in this embodiment of this application may be an indirect coupling or a communication connection between apparatuses, units, or modules in an electrical form, a mechanical form, or another form, and is used for information exchange between the apparatuses, the units, or the modules. The processor 1011 may cooperate with the memory 1030. The processor 1011 may execute the program instructions stored in the memory 1030. Optionally, at least one of the one or more memories may be included in the processor.

A specific connection medium between the transceiver 1010, the processor 1011, and the memory 1030 is not limited in embodiments of this application. In this embodiment of this application, the memory 1030, the processor 1011, and the transceiver 1010 are connected by a bus 1040 in FIG. 10. The bus is represented by a bold line in FIG. 10. A connection manner between other components is merely an example for description, and imposes no limitation. The bus may be classified into an address bus, a data bus, a control bus, and the like. For ease of representation, only one thick line is for representing the bus in FIG. 10, but this does not mean that there is only one bus or only one type of bus.

In this embodiment of this application, the processor may be a general-purpose processor, a digital signal processor, an application-specific integrated circuit, a field programmable gate array or another programmable logic device, a discrete gate or transistor logic device, a discrete hardware component, or the like. The processor can implement or execute the methods, the steps, and the logical block diagrams disclosed in embodiments of this application. The general-purpose processor may be a microprocessor or any conventional processor or the like. The steps of the methods disclosed in combination with embodiments of this application may be directly implemented by a hardware processor, or may be implemented by using a combination of hardware and software modules in the processor, or the like.

In this embodiment of this application, the memory may include but is not limited to a nonvolatile memory such as a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), or a portable read-only memory (Compact Disc Read-Only Memory, CD-ROM). The memory is any storage medium that can be used to carry or store program code in a form of an instruction or a data structure and that can be read and/or written by a computer (for example, the communication apparatus shown in this application), but is not limited thereto. The memory in embodiments of this application may be alternatively a circuit or any other apparatus that can implement a storage function, and is configured to store the program instructions and/or the data.

The processor 1011 is mainly configured to: process a communication protocol and communication data, control the entire communication apparatus, execute a software program, and process data of the software program. The memory 1030 is mainly configured to store the software program and the data. The transceiver 1010 may include a control circuit and an antenna. The control circuit is mainly configured to perform conversion between a baseband signal and a radio frequency signal and process the radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user.

After the communication apparatus is powered on, the processor 1011 may read a software program in the memory 1030, interpret and execute instructions of the software program, and process data of the software program. When data needs to be sent wirelessly, the processor 1011 performs baseband processing on the to-be-sent data, and then outputs a baseband signal to a radio frequency circuit. The radio frequency circuit performs radio frequency processing on the baseband signal, and then sends, through the antenna, a radio frequency signal in an electromagnetic wave form. When data is sent to the communication apparatus, the radio frequency circuit receives a radio frequency signal through the antenna, converts the radio frequency signal into a baseband signal, and outputs the baseband signal to the processor 1011; and the processor 1011 converts the baseband signal into data and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

The communication apparatus shown in embodiments of this application may further have more components than those in FIG. 10, or the like. This is not limited in embodiments of this application. The methods performed by the processor and the transceiver are merely examples. For specific steps performed by the processor and the transceiver, refer to the methods described above.

In another possible implementation, in the communication apparatus shown in FIG. 9, the processing module 901 may be one or more logic circuits, and the transceiver module 902 may be an input/output interface, or may be referred to as a communication interface, an interface circuit, an interface, or the like. Alternatively, the transceiver module 902 may be a sending module and a receiving module. The sending module may be an output interface, and the receiving module may be an input interface. The sending module and the receiving module are integrated into one module, for example, an input/output interface. As shown in FIG. 11, a communication apparatus shown in FIG. 11 includes a logic circuit 1101 and an interface 1102. To be specific, the processing module 901 may be implemented by using the logic circuit 1101, and the transceiver module 902 may be implemented by using the interface 1102. The logic circuit 1101 may be a chip, a processing circuit, an integrated circuit, a system on chip (system on chip, SoC) chip, or the like. The interface 1102 may be a communication interface, an input/output interface, a pin, or the like. For example, FIG. 11 shows an example in which the communication apparatus is a chip. The chip includes the logic circuit 1101 and the interface 1102.

In this embodiment of this application, the logic circuit and the interface may further be coupled to each other. A specific manner of connection between the logic circuit and the interface is not limited in this embodiment of this application. For example, the logic circuit 1101 may be configured to perform a function or a step implemented by the processing module 901 shown in FIG. 9, and the interface 1102 may be configured to perform a function or a step implemented by the transceiver module 902 shown in FIG. 9. For specific descriptions of the logic circuit 1101 and the interface 1102, refer to FIG. 9 or the method embodiments shown above. Details are not described herein again.

The foregoing descriptions of the communication apparatus are merely examples. For specific descriptions of the communication apparatus shown in FIG. 11, refer to the foregoing method embodiments or FIG. 9 or FIG. 10. Details are not described herein again.

The communication apparatus shown in embodiments of this application may implement the methods according to embodiments of this application in a form of hardware, or may implement the methods according to embodiments of this application in a form of software. This is not limited in embodiments of this application.

In the foregoing embodiments, for descriptions of related steps and information, refer to the descriptions in the foregoing method embodiments. Details are not described herein again. For specific implementations of embodiments shown in FIG. 11, further refer to the foregoing embodiments. Details are not described herein again.

An embodiment of this application further provides a communication system. The communication system includes a terminal device and a network device. Interaction between the terminal device and the network device may be used to perform all or some of the steps in any one of the foregoing method embodiments.

In addition, this application further provides a computer program. The computer program is configured to implement operations and/or processing performed by communication apparatuses in the method provided in this application.

This application further provides a computer-readable storage medium. The computer-readable storage medium stores computer code. When the computer code is run on a computer, the computer is enabled to perform operations and/or processing performed by the communication apparatuses in the methods provided in this application.

This application further provides a computer program product. The computer program product includes computer code or a computer program. When the computer code or the computer program is run on a computer, operations and/or processing performed by the communication apparatuses in the methods provided in this application are/is performed.

In the several embodiments provided in this application, it should be understood that the disclosed system, apparatus, and method may be implemented in other manners. For example, the described apparatus embodiments are merely examples. For example, division into modules is merely logical functional division. In an actual implementation, another division manner may be used. For example, a plurality of modules or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The modules described as separate parts may or may not be physically separate, and parts displayed as modules may or may not be physical modules, may be located in one position, or may be distributed on a plurality of network modules. Some or all of the modules may be selected based on an actual requirement to achieve the technical effects of the solutions provided in embodiments of this application.

In addition, functional modules in embodiments of this application may be integrated into one processing module, or each of the modules may exist alone physically, or two or more modules may be integrated into one module. The integrated module may be implemented in a form of hardware, or may be implemented in a form of a software functional module.

When the integrated module is implemented in the form of a software functional module and sold or used as an independent product, the integrated unit may be stored in a computer-readable storage medium. Based on such an understanding, the technical solutions of this application essentially, the part contributing to the conventional technologies, or all or some of the technical solutions may be implemented in a form of a computer software product. The computer software product is stored in a readable storage medium, and includes a plurality of instructions for instructing a computer device (which may be a personal computer, a server, a network device, or the like) to perform all or some of the steps of the methods described in embodiments of this application. The readable storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the scope of protection of this application. Any variation or replacement readily figured out by a person skilled in the art within the technical scope disclosed in this application shall fall within the scope of protection of this application. Therefore, the scope of protection of this application shall be subject to the scope of protection of the claims.

## Claims

1. A communication method, comprising:
obtaining first indication information, wherein the first indication information indicates a reference energy proportion of space-frequency joint bases projected onto a downlink channel;
determining, based on the energy proportion and a current downlink channel, a first space-frequency joint basis matrix to be reported; and
sending first feedback information, wherein the first feedback information comprises the first space-frequency joint basis matrix or a first basis difference matrix, and the first basis difference matrix comprises a difference between the first space-frequency joint basis matrix and a reported second space-frequency joint basis matrix.

2. The method according to claim 1, wherein the first feedback information further comprises a first vector difference matrix, the first vector difference matrix is a matrix formed by a difference between a first vector matrix and a second vector matrix, the first vector matrix is a vector matrix obtained by combining, on diagonal elements, eigenvalues respectively corresponding to space-frequency joint bases in the first space-frequency joint basis matrix, and the second vector matrix is a vector matrix obtained by combining, on diagonal elements, eigenvalues respectively corresponding to space-frequency joint bases in the second space-frequency joint basis matrix.

3. The method according to claim 1 or 2, wherein determining, based on the energy proportion and the current downlink channel, the first space-frequency joint basis matrix to be reported comprises:
selecting the first space-frequency joint basis matrix from an initial space-frequency joint basis matrix based on the energy proportion, wherein the reported second space-frequency joint basis matrix is also selected from the initial space-frequency joint basis matrix, and the initial space-frequency joint basis matrix is obtained through eigendecomposition on a space-frequency statistical covariance matrix of the downlink channel.

4. The method according to claim 3, further comprising:
receiving second indication information, wherein the second indication information indicates to report the first feedback information.

5. The method according to any one of claims 1 to 4, further comprising:
receiving third indication information, wherein the third indication information indicates a first time-frequency resource, and the first time-frequency resource is used to carry the first basis difference matrix.

6. The method according to claim 5, further comprising:
sending second feedback information, wherein the second feedback information indicates a quantity of space-frequency joint bases in the first basis difference matrix.

7. The method according to any one of claims 1 to 6, wherein obtaining the first indication information comprises:
receiving the first indication information.

8. A communication method, comprising:
sending first indication information, wherein the first indication information indicates a reference energy proportion of space-frequency joint bases projected onto a downlink channel; and
receiving first feedback information, wherein the first feedback information comprises a first space-frequency joint basis matrix or a first basis difference matrix, the first basis difference matrix comprises a difference between the first space-frequency joint basis matrix and a reported second space-frequency joint basis matrix, and the reference energy proportion is used to determine the first space-frequency joint basis matrix.

9. The method according to claim 8, wherein the first feedback information further comprises a first vector difference matrix, the first vector difference matrix is a matrix formed by a difference between a first vector matrix and a second vector matrix, the first vector matrix is a vector matrix obtained by combining, on diagonal elements, eigenvalues respectively corresponding to space-frequency joint bases in the first space-frequency joint basis matrix, and the second vector matrix is a vector matrix obtained by combining, on diagonal elements, eigenvalues respectively corresponding to space-frequency joint bases in the second space-frequency joint basis matrix.

10. The method according to claim 8 or 9, further comprising:
sending second indication information, wherein the second indication information indicates to report the first feedback information.

11. The method according to claim 10, further comprising:
determining that a condition for continuing to report the first feedback information is met.

12. The method according to any one of claims 8 to 11, further comprising:
sending third indication information, wherein the third indication information indicates a first time-frequency resource, and the first time-frequency resource is used to carry the first basis difference matrix.

13. The method according to claim 12, further comprising:
receiving second feedback information, wherein the second feedback information indicates a quantity of space-frequency joint bases in the first basis difference matrix.

14. The method according to any one of claims 8 to 13, further comprising:
performing demodulation reference signal DMRS-assisted sounding reference signal SRS channel updating based on the first basis difference matrix.

15. A communication method, comprising:
sending third feedback information, wherein the third feedback information comprises a third space-frequency joint basis matrix; and
sending fourth feedback information, wherein the fourth feedback information indicates a first energy proportion, and the first energy proportion comprises an energy proportion of space-frequency joint bases projected onto a current downlink channel.

16. The method according to claim 15, wherein the fourth feedback information comprises a value of the first energy proportion.

17. The method according to claim 15, wherein the fourth feedback information comprises an index corresponding to the first energy proportion.

18. The method according to any one of claims 15 to 17, further comprising:
receiving fourth indication information, wherein the fourth indication information indicates to re-report a space-frequency joint basis matrix; and
sending fifth feedback information, wherein the fifth feedback information comprises a fourth space-frequency joint basis matrix.

19. The method according to any one of claims 15 to 17, further comprising:
receiving fourth indication information, wherein the fourth indication information indicates to re-report a space-frequency joint basis matrix; and
sending sixth feedback information, wherein the sixth feedback information comprises a difference matrix, and the difference matrix comprises a difference between space-frequency joint bases in a fourth space-frequency joint basis matrix and space-frequency joint bases in the third space-frequency joint basis matrix.

20. The method according to claim 18 or 19, further comprising:
receiving fifth indication information, wherein the fifth indication information indicates a second energy proportion, and the second energy proportion comprises the energy proportion of the space-frequency joint bases projected onto the current downlink channel; and
determining the fourth space-frequency joint basis matrix based on the second energy proportion.

21. The method according to any one of claims 15 to 20, wherein the third feedback information further comprises a third vector matrix, and the third vector matrix is a vector matrix obtained by combining, on diagonal elements, eigenvalues corresponding to the space-frequency joint bases in the third space-frequency joint basis matrix.

22. The method according to any one of claims 15 to 20, wherein sending the fourth feedback information comprises:
periodically sending the fourth feedback information.

23. A communication method, comprising:
receiving third feedback information, wherein the third feedback information comprises a third space-frequency joint basis matrix; and
receiving fourth feedback information, wherein the fourth feedback information indicates a first energy proportion, and the first energy proportion comprises an energy proportion of space-frequency joint bases projected onto a current downlink channel.

24. The method according to claim 23, further comprising:
sending fourth indication information, wherein the fourth indication information indicates to re-report a space-frequency joint basis matrix; and
receiving fifth feedback information, wherein the fifth feedback information comprises a fourth space-frequency joint basis matrix.

25. The method according to claim 24, further comprising:
determining that the first energy proportion is less than a preset energy proportion threshold.

26. A communication apparatus, wherein the communication apparatus comprises a module configured to perform the method according to any one of claims 1 to 7 and 15 to 22; or the communication apparatus comprises a processor, and the processor is configured to perform the method according to any one of claims 1 to 7 and 15 to 22.

27. A communication apparatus, wherein the communication apparatus comprises a module configured to perform the method according to any one of claims 8 to 14 and 23 to 25; or the communication apparatus comprises a processor, and the processor is configured to perform the method according to any one of claims 8 to 14 and 23 to 25.

28. A communication apparatus, comprising a logic circuit and an interface, wherein the logic circuit is coupled to the interface; and
the interface is configured to input and/or output information, and the logic circuit is configured to perform the method according to any one of claims 1 to 25.

29. A computer-readable storage medium, wherein the computer-readable storage medium is configured to store a computer program; and when the computer program is executed, the method according to any one of claims 1 to 25 is performed.

30. A communication system, comprising a network device and a terminal device, wherein the terminal device is configured to perform the method according to any one of claims 1 to 7 and 15 to 22, and the network device is configured to perform the method according to any one of claims 8 to 14 and 23 to 25.
